(19) **Europäisches Patentamt**
**European Patent Office**
**Office européen des brevets**

(11) **EP 4 239 387 B1**

(12) **EUROPEAN PATENT SPECIFICATION**

(45) Date of publication and mention
of the grant of the patent:
**13.08.2025 Bulletin 2025/33**

(21) Application number: **22793097.1**

(22) Date of filing: **11.10.2022**

(51) International Patent Classification (IPC):
**G02B 13/00** (2006.01)     **G02B 9/64** (2006.01)

(52) Cooperative Patent Classification (CPC):
**G02B 9/64; G02B 13/0045**

(86) International application number:
**PCT/KR2022/015302**

(87) International publication number:
**WO 2023/136427 (20.07.2023 Gazette 2023/29)**

(54) **LENS ASSEMBLY AND ELECTRONIC DEVICE COMPRISING SAME**

LINSENANORDNUNG UND ELEKTRONISCHE VORRICHTUNG DAMIT

ENSEMBLE LENTILLE ET DISPOSITIF ÉLECTRONIQUE LE COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.01.2022 KR 20220005124**
**23.03.2022 KR 20220036045**

(43) Date of publication of application:
**06.09.2023 Bulletin 2023/36**

(73) Proprietor: **Samsung Electronics Co., Ltd.**
**Gyeonggi-do 16677 (KR)**

(72) Inventors:
• **JEON, Sangyong**
**Suwon-si, Gyeonggi-do 16677 (KR)**
• **SHIN, Jeongkil**
**Suwon-si, Gyeonggi-do 16677 (KR)**
• **HEU, Min**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(56) References cited:
CN-A- 106 950 681       CN-A- 110 398 822
CN-A- 111 538 142       CN-A- 112 731 627
CN-A- 112 748 531       CN-A- 112 748 531
CN-B- 110 398 822       KR-A- 20200 085 205
KR-A- 20210 150 918

• **ROBERT E. FISCHER ET AL: "<title>Removing
the mystique of glass selection</title>",
PROCEEDINGS OF SPIE, VISUAL
COMMUNICATIONS AND IMAGE PROCESSING
2005, vol. 5514, 22 October 2004 (2004-10-22),
Visual Communications and Image Processing
2005, 2005, Beijing, China, pages 134 - 146,
XP055046912, ISSN: 0277-786X, DOI: 10.1117/
12.562914**
• **"Handbook of optical systems, Aberration theory
and correction of optical systems, Chapter 31:
Correction of Aberrations ED - Gross H", 1
January 2007, HANDBOOK OF OPTICAL
SYSTEMS, ABERRATION THEORY AND
CORRECTION OF OPTICAL SYSTEMS, WILEY-
VCH, WEINHEIM, DE, PAGE(S) 215 - 221, 225,
ISBN: 978-3-527-40379-0, XP002719371**
• **"Modern Lens Design", 1 January 1992,
MCGRAW-HILL, INC, ISBN: 978-0-07-059178-3,
article WARREN J. SMITH: "Modern Lens
Design", pages: 25 - 27, XP055152035**

**Description**

**[Technical Field]**

An embodiment of the disclosure relates to a lens assembly, e.g., a lens assembly including a plurality of lenses and an electronic device including the same.

**[Background Art]**

Optical devices, for example, cameras capable of capturing images or videos have been widely used, and digital cameras or video cameras with solid image sensors such as charge coupled device (CCD) or complementary metal-oxide semiconductor (CMOS) have recently become commonplace. Solid image sensor (CCD or CMOS)-adopted optical devices may easily save, copy, or move images as compared with film-type optical devices.

Recently, a plurality of optical devices, e.g., two or more selected from a macro camera, a telephoto camera, and/or a wide-angle camera, are built in one electronic device to enhance the quality of shot images and give various visual effects to shot images. For example, it is possible to obtain images of an object with multiple cameras having different optical properties and synthesize the images to obtain a high-quality shot image. With the capability of capturing high-quality images with a plurality of optical devices (e.g., cameras) equipped, electronic devices, e.g., mobile communication terminals or smartphones, are replacing shooting-only electronic devices, such as digital compact cameras, and are expected to take place of high-end cameras, such as single-lens reflex digital cameras, in the future.

The above-described information may be provided as background for the purpose of helping understanding of the disclosure. No claim or determination is made as to whether any of the foregoing is applicable as background art in relation to the disclosure.

CN106950681A, CN112748531A, CN110398822B, and CN112731627A each disclose a lens assembly. Robert E. Fischer et al. disclose the Reference: PROCEEDINGS OF SPIE, VISUAL COMMUNICATIONS AND IMAGE PROCESSING. Herbert Gross, Hannfried Ziigge, Martin Peschka, Fritz, Blechingert disclose the Reference: HANDBOOK OF OPTICAL SYSTEMS, ABERRATION THEORY AND CORRECTION OF OPTICAL SYSTEMS, WILEY-VCH, WEINHEIM. Warren J. Smith discloses the Reference: Modern Lens Design.

**[Disclosure]**

**[Technical Problem]**

A high-performance camera, such as a single-lens reflex camera, may use about 1/1.2 inch to 1 inch-size large image sensor, and the camera performance or the quality of captured images may be enhanced in proportion to the size of the image sensor. Such a high-end camera may prevent degradation of image quality by including a lens assembly corresponding to the size and performance of the image sensor. For example, to enhance field curvature or control aberration while meeting the designed performance of an enlarged image sensor, the lens(es) constituting the lens assembly may be enlarged or the number of lenses may be increased. However, since the number or size of lenses of the optical system may be limited in a compact electronic device, such as a smart phone, it may be difficult to secure a lens assembly that meets the performance of the enlarged image sensor. Furthermore, with a limited number (e.g., about seven) of lenses, the lens assembly may easily be downsized but may have difficulty in securing optical performance, such as brightness (e.g., F-number), image stabilization performance, field curvature or aberration control.

An embodiment of the disclosure aims to address the foregoing issues and/or drawbacks and provide advantages described below, providing a lens assembly which is compact and has proper brightness and an electronic device including the same.

An embodiment of the disclosure may provide a lens assembly having an enhanced image stabilization function and/or an electronic device including the same.

Other aspects according to various embodiments will be suggested through in the following detailed description and would be partially apparent from the description or appreciated through the suggested embodiments.

**[Technical Solution]**

The invention is set out in the appended set of claims.

According to the disclosure, a lens assembly and/or an electronic device including the same comprises at least seven lenses sequentially arranged along an optical axis direction from an object side to an image sensor side. A first lens first disposed from the object side among the at least seven lenses includes a convex object-side surface having a positive refractive power. A second lens second disposed from the object side among the at least seven lenses includes a convex object-side surface having a negative refractive power. A third lens third disposed from the object side among the at least seven lenses includes a convex object-side surface having a positive refractive power. A fourth lens fourth disposed from the object side among the at least seven lenses includes a concave object-side surface having a negative refractive power. The lens assembly meets Conditional equation 1 and Conditional equation 2.

[Conditional equation 1]

$$80 \leq Vd1$$

[Conditional equation 2]

$$\frac{f(L-1)}{f(L)} \leq -1.5$$

where 'Vd1' is an Abbe's number of the first lens, 'f(L-1)' is a focal length of the second lens from the image sensor side, and 'f(L)' is a focal length of the first lens from the image sensor side.

According to the disclosure, an electronic device comprises the lens assembly according to the disclosure.

[Advantageous Effects]

The lens assembly may secure a sufficient distance between the lens(es) and the image sensor, providing good optical performance although the lens(es) is/are downsized. For example, as equipped in a downsized electronic device, e.g., a smartphone, the lens assembly may provide excellent optical performance. In an embodiment, in the lens assembly and/or electronic device, the first object-side lens is formed of a glass material having a high dispersion coefficient, leading to an enhancement in bright performance when reducing the total length of the lens assembly or maintaining it in the same total length. In an embodiment, in the lens assembly and/or electronic device, the first lens and second lens on the side of the image sensor may be controlled for their refractive power, so that a good relative illumination may be secured at a point, about 1.065 times away from the diagonal effective diameter area of the imaging plane in the radiation direction. For example, as the operation range for image stabilization may be extended, the optical performance of the lens assembly and/or electronic device may be enhanced. Other various effects may be provided directly or indirectly in the disclosure.

[Description of the Drawings]

The foregoing and other aspects, configurations, and/or advantages of embodiments of the disclosure will be more apparent from the following detailed description taken in conjunction with the accompanying drawings.

FIG. 1 is a block diagram illustrating an electronic device in a network environment according to an embodiment of the disclosure;

FIG. 2 is a block diagram illustrating a camera module according to embodiments of the disclosure;

FIG. 3 is a front perspective view illustrating an electronic device according to embodiments of the disclosure;

FIG. 4 is a rear perspective view illustrating the electronic device of FIG. 3;

FIG. 5 is a view illustrating a configuration of a lens assembly according to an embodiment of the disclosure;

FIG. 6 is a view illustrating an example of an imaging plane of an image sensor in the lens assembly of FIG. 5;

FIG. 7 is a view illustrating a configuration of a lens assembly according to an embodiment of the disclosure;

FIGS. 8A, 8B, and 8C are graphs illustrating spherical aberration, astigmatism, and distortion rate of a lens assembly according to an embodiment of the disclosure;

FIG. 9 is a graph illustrating the relative illumination of a lens assembly according to an embodiment of the disclosure;

FIG. 10 is a view illustrating a configuration of a lens assembly according to an embodiment of the disclosure;

FIGS. 11A, 11B, and 11C are graphs illustrating spherical aberration, astigmatism, and distortion rate of a lens assembly according to an embodiment of the disclosure;

FIG. 12 is a graph illustrating the relative illumination of a lens assembly according to an embodiment of the disclosure;

FIG. 13 is a view illustrating a configuration of a lens assembly according to an embodiment of the disclosure;

FIGS. 14A, 14B, and 14C are graphs illustrating spherical aberration, astigmatism, and distortion rate of a lens assembly according to an embodiment of the disclosure;

FIG. 15 is a graph illustrating the relative illumination of a lens assembly according to an embodiment of the disclosure;

FIG. 16 is a view illustrating a configuration of a lens assembly according to an embodiment of the disclosure;

FIGS. 17A, 17B, and 17C are graphs illustrating spherical aberration, astigmatism, and distortion rate of a lens assembly according to an embodiment of the disclosure;

FIG. 18 is a graph illustrating the relative illumination of a lens assembly according to an embodiment of the disclosure;

FIG. 19 is a view illustrating a configuration of a lens assembly according to an embodiment of the disclosure;

FIGS. 20A, 20B, and 20C are graphs illustrating spherical aberration, astigmatism, and distortion rate of a lens assembly according to an embodiment of the disclosure; and

FIG. 21 is a graph illustrating the relative illumination of a lens assembly according to an embodiment of the disclosure.

Throughout the drawings, like reference numerals may be assigned to like parts, components, and/or structures.

[Mode for Invention]

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be apparent to those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

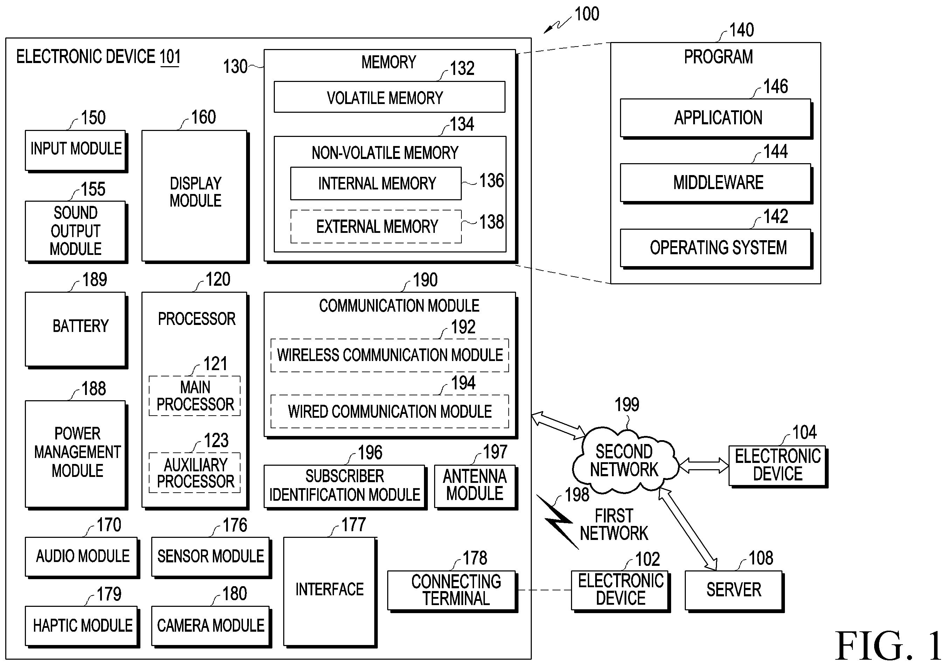

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

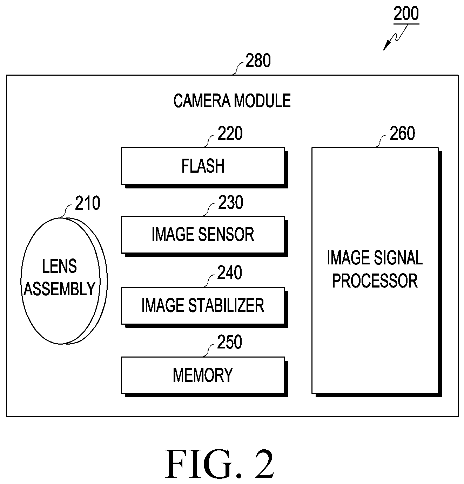

FIG. 2 is a block diagram 200 illustrating the camera module 280 (e.g., the camera module 180 of FIG. 1) according to embodiments of the disclosure. Referring to FIG. 2, the camera module 280 may include a lens assembly 210, a flash 220, an image sensor 230, an image stabilizer 240, memory 250 (e.g., buffer memory), or an image signal processor 260. In some embodiments, the lens assembly 210 may include the image sensor 230. The lens assembly 210 may collect light emitted or reflected from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., field of view, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or the electronic device 201 including the camera module 180. This allows compensating for at least part of a negative effect (e.g., image blurring) by the movement on an image being captured. According to an embodiment, the image stabilizer 240 may sense such a movement by the camera module 280 or the electronic device (e.g., the electronic device 101 of FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory (e.g., the memory 130 of FIG. 1) or as a separate memory that is operated independently from the memory.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 of FIG. 1) outside the camera module 280. According to an embodiment, the image signal processor 260 may be configured as at least part of the processor (e.g., the processor 120 of FIG. 1), or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device (e.g., the electronic device 101 of FIG. 1) may include a plurality of camera modules 280 having different attributes or functions. In such a case, at least one of the plurality of camera modules 280 may form, for example, a wide-angle camera and at least another of the plurality of camera modules180 may form a telephoto camera. Similarly, at least one of the plurality of camera modules 280 may form, for example, a front camera and at least another of the plurality of camera modules 180 may form a rear camera.

The electronic device according to various embodiments may be one of various types of devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities. Some of the plurality of entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

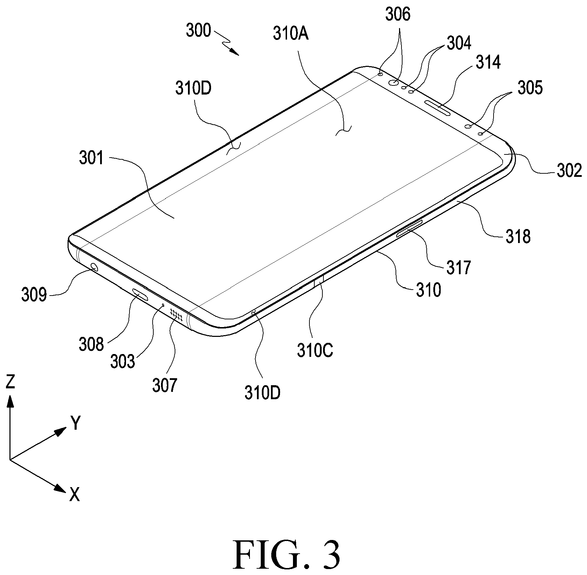

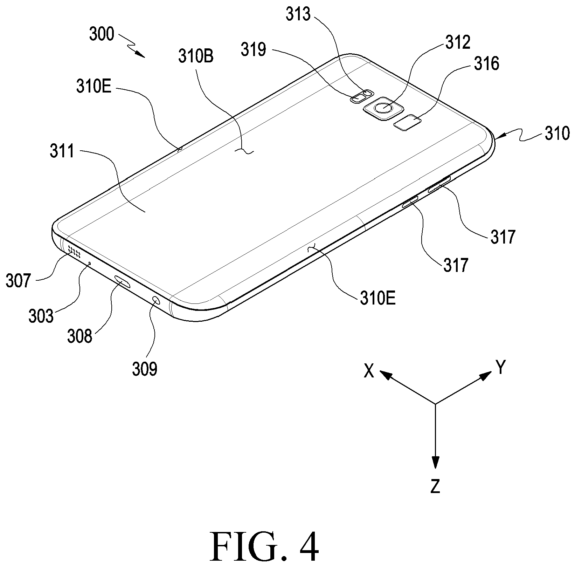

FIG. 3 is a front perspective view illustrating an electronic device 300 (e.g., the electronic device 101 of FIG. 1) according to an embodiment of the disclosure. FIG. 4 is a rear perspective view illustrating the electronic device 300 as illustrated in FIG. 3.

Referring to FIGS. 3 and 4, according to an embodiment, an electronic device 300 (e.g., the electronic device 101 of FIG. 1) may include a housing 310 including a first surface (or front surface) 310A, a second surface (or rear surface) 310B, and a side surface 310C surrounding a space between the first surface 310A and the second surface 310B. According to another embodiment (not shown), the housing 310 may denote a structure forming part of the first surface 310A, the second surface 310B, and the side surface 310C of FIG. 3. According to an embodiment, the first surface 310A may be formed by a front plate 302 (e.g., a glass plate or polymer plate with various coat layers) at least part of which is substantially transparent. According to another embodiment, the front plate 302 may be coupled with the housing 310 and, along with the housing 310, may form an internal space. According to an embodiment, the 'internal space' may mean a space, as an internal space of the housing 310, for receiving at least part of the display device 160 of FIG. 1 or the display 301 described below.

According to an embodiment, the second surface 310B may be formed of a substantially opaque back plate 311. The rear plate 311 may be formed of, e.g., laminated or colored glass, ceramic, polymer, metal (e.g., aluminum, stainless steel (STS), or magnesium), or a combination of at least two thereof. The side surface 310C may be formed by a side bezel structure (or a "side member") 318 that couples to the front plate 302 and the rear plate 311 and includes a metal and/or polymer. According to an embodiment, the rear plate 311 and the side bezel structure 318 may be integrally formed together and include the same material (e.g., a metal, such as aluminum).

In the embodiment illustrated, the front plate 302 may include two first regions 310D, which seamlessly and bendingly extend from the first surface 310A to the rear plate 311, on both the long edges of the front plate 302. In the embodiment (refer to FIG. 4) illustrated, the rear plate 311 may include two second regions 310E, which seamlessly and bendingly extend from the second surface 310B to the front plate, on both the long edges. According to an embodiment, the front plate 302 (or the rear plate 311) may include only one of the first regions 310D (or the second regions 310E). According to another embodiment, the first regions 310D or the second regions 301E may partially be excluded. In the above-described embodiments, at side view of the electronic device 300, the side bezel structure 318 may have a first thickness (or width) for sides (e.g., the side where the connector hole 308 is formed) that do not have the first regions 310D or the second regions 310E and a second thickness, which is smaller than the first thickness, for sides (e.g., the side where the key input device 317 is disposed) that have the first regions 310D or the second regions 310E.

According to an embodiment, the electronic device 300 may include at least one or more of a display 301, audio modules 303, 307, and 314, sensor modules 304, 316, and 319, camera modules 305, 312, and 313 (e.g., the camera module 180 or 280 of FIG. 1 or FIG. 2), key input devices 317, a light emitting device 306, and connector holes 308 and 309. According to an embodiment, the electronic device 300 may exclude at least one (e.g., the key input device 317 or the light emitting device 306) of the components or may add other components.

The display 301 (e.g., the display module 160 of FIG. 1) may be exposed through a significant portion of the front plate 302. According to an embodiment, at least a portion of the display 301 may be exposed through the front plate 302 forming the first surface 310A and the first regions 310D of the side surface 310C. According to an embodiment, the edge of the display 301 may be formed to be substantially the same in shape as an adjacent outer edge of the front plate 302. According to another embodiment (not shown), the interval between the outer edge of the display 301 and the outer edge of the front plate 302 may remain substantially even to give a larger area of exposure the display 301.

According to another embodiment (not shown), the screen display region (e.g., the active region), or a region (e.g., the inactive region) off the screen display region, of the display 301 may have a recess or opening in a portion thereof, and at least one or more of the audio module 314 (e.g., the audio module 170 of FIG. 1), sensor module 304 (e.g., the sensor module 176 of FIG. 1), camera module 305, and light emitting device 306 may be aligned with the recess or opening. According to another embodiment (not shown), at least one or more of the audio module 314, sensor module 304, camera module 305, fingerprint sensor 316, and light emitting device 306 may be included on the rear surface of the screen display region of the display 301. According to an embodiment (not shown), the display 301 may be disposed to be coupled with, or adjacent, a touch detecting circuit, a pressure sensor capable of measuring the strength (pressure) of touches, and/or a digitizer for detecting a magnetic field-type stylus pen. According to an embodiment, at least part of the sensor modules 304 and 319 and/or at least part of the key input device 317 may be disposed in the first regions 310D and/or the second regions 310E.

The audio modules 303, 307, and 314 may include a microphone hole 303 and speaker holes 307 and 314. The microphone hole 303 may have a microphone inside to obtain external sounds. According to an embodiment, there may be a plurality of microphones to be able to detect the direction of a sound. The speaker holes 307 and 314 may include an external speaker hole 307 and a phone receiver hole 314. According to an embodiment, the speaker holes 307 and 314 and the microphone hole 303 may be implemented as a single hole, or speakers may be rested without the speaker holes 307 and 314 (e.g., piezo speakers).

The sensor modules 304, 316, and 319 may generate an electrical signal or data value corresponding to an internal operating state or external environmental state of the electronic device 300. The sensor modules 304, 316, and 319 may include a first sensor module 304 (e.g., a proximity sensor) disposed on the first surface 310A of the housing 310, and/or a second sensor module (not shown) (e.g., a fingerprint sensor), and/or a third sensor module 319 (e.g., a heart-rate monitor (HRM) sensor) disposed on the second surface 310B of the housing 310, and/or a fourth sensor module 316 (e.g., a fingerprint sensor). The fingerprint sensor may be disposed on the second surface 310B as well as the first surface 310A (e.g., the display 301) of the housing 310. The electronic device 300 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a first camera device 305 disposed on the first surface 310A of the electronic device 300, and a second camera device 312 and/or a flash 313 disposed on the second surface 310B. The camera modules 305 and 312 may include one or more lenses, an image sensor, and/or an image signal processor. The flash 313 may include, e.g., a light emitting diode (LED) or a xenon lamp. According to an embodiment, two or more lenses (an infrared (IR) camera, a wide-angle lens, and a telescopic lens) and image sensors may be disposed on one surface of the electronic device 300.

The key input device 317 may be disposed on the side surface 310C of the housing 310. According to an embodiment, the electronic device 300 may exclude all or some of the above-mentioned key input devices 317 and the excluded key input devices 317 may be implemented in other forms, e.g., as soft keys, on the display 301. According to an embodiment, the key input device may include the sensor module 316 disposed on the second surface 310B of the housing 310.

The light emitting device 306 may be disposed on, e.g., the first surface 310A of the housing 310. The light emitting device 306 may provide, e.g., information about the state of the electronic device 300 in the form of light. According to an embodiment, the light emitting device 306 may provide a light source that interacts with, e.g., the camera module 305. The light emitting device 306 may include, e.g., a light emitting diode (LED), an infrared (IR) LED, or a xenon lamp.

The connector holes 308 and 309 may include a first connector hole 308 for receiving a connector (e.g., a universal serial bus (USB) connector) for transmitting or receiving power and/or data to/from an external electronic device and/or a second connector hole 309 (e.g., an earphone jack) for receiving a connector for transmitting or receiving audio signals to/from the external electronic device.

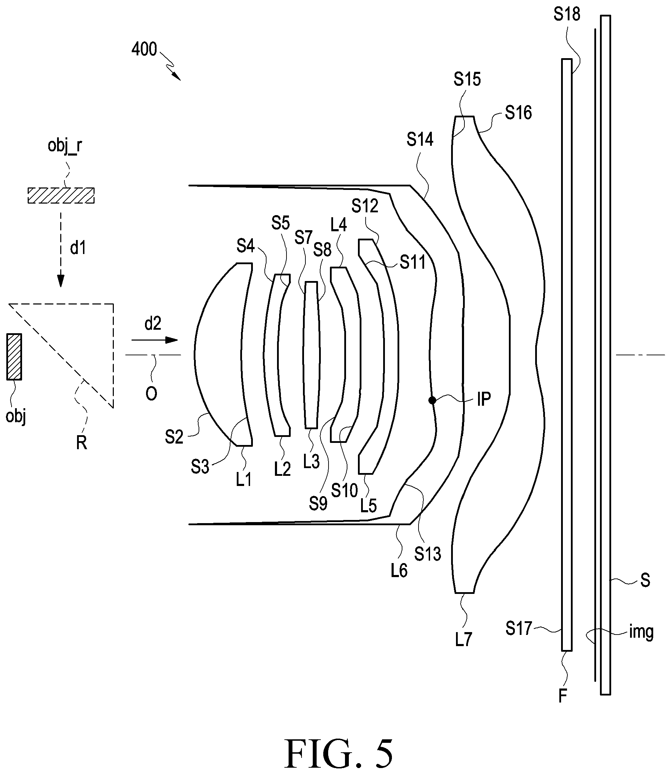

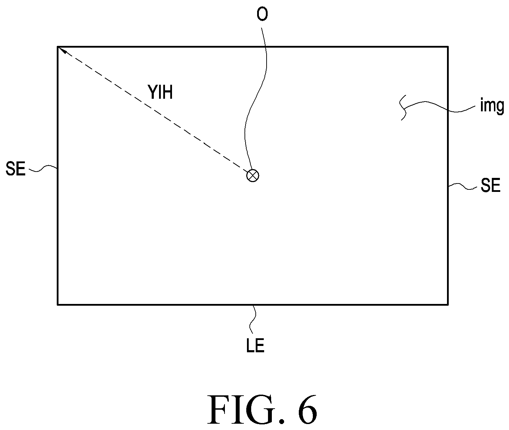

FIG. 5 is a view illustrating a configuration of a lens assembly according to an embodiment of the disclosure. FIG. 6 is a view illustrating an example of an imaging plane of an image sensor in the lens assembly of FIG. 5.

Referring to FIGS. 5 and 6, a lens assembly 400 (e.g., the lens assembly 210 and/or the image sensor 230 of FIG. 2) according to an embodiment of the disclosure includes a plurality of lenses L1, L2, L3, L4, L5, L6, and L7. Further, the lens assembly 400 may optionally include an infrared cut filter F, and/or an image sensor S (e.g., an imaging plane img). According to an embodiment, the infrared cut filter F may be omitted or replaced with a band pass filter. In another embodiment, the infrared cut filter F and/or the image sensor S (e.g., the image sensor 230 of FIG. 2) may be described as a separate component from the lens assembly 400. For example, the infrared cut filter F and/or the image sensor (S) 230 may be equipped in an electronic device (e.g., the electronic device 101, 102, 104, or 300 of FIG. 1 or 3) or an optical device (e.g., the camera module 180 or 280 of FIG. 1 or 2), and a plurality of lenses L1, L2, L3, L4, L5, L6, and L7 constituting the lens assembly 400 may be mounted in the electronic device or optical device in a state of being aligned with the infrared cut filter F and/or the image sensor (S) 230 on the optical axis O. In an embodiment, at least one of the lenses L1, L2, L3, L4, L5, L6, and L7 may reciprocate along the optical axis O direction. The electronic device (e.g., the electronic device 101, 102, 104, or 300 of FIG. 1 or 3) or the processor 120 of FIG. 1 may perform focusing or focal length adjustment by reciprocating at least one of the lenses L1, L2, L3, L4, L5, L6, and L7. In another embodiment, the lens assembly 400 may be disposed as any one of the camera modules 305, 312, and 313 of FIG. 3 or 4.

In this embodiment, the plurality of lenses L1, L2, L3, L4, L5, L6, and L7 include a first lens L1, a second lens L2, a third lens L3, a fourth lens L4, a fifth lens L5, a sixth lens L6, and a seventh lens L7 sequentially arranged along the optical axis O direction from the object side obj to the image sensor (S) 230 (e.g., the imaging plane img). For example, the lenses L1, L2, L3, L4, L5, L6, and L7, along with the image sensor (S) 230, may be aligned on the optical axis O. In an embodiment, the lens assembly 400 may further include an aperture disposed between the second lens L2 and the third lens L3. "Between the second lens L2 and the third lens L3" may include the image sensor-side surface S5 of the second lens L2 and the object-side surface S7 of the third lens L3. For example, as will be discussed through the lens data of the tables below, either the image sensor-side surface S5 of the second lens L2 or the object-side surface S7 of the third lens L3 may be provided as an aperture. One or more of the plurality of lenses L1, L2, L3, L4, L5, L6, and L7 may be formed of a plastic material and/or a glass material.

According to an embodiment, each of the lenses L1, L2, L3, L4, L5, L6, and L7 may include an object obj-side surface and an image sensor S, 230-side surface. In describing various embodiments below, for the sake of brevity of the drawings, it should be noted that some of the object-side surface(s) and image sensor-side surface(s) of the lenses L1, L2, L3, L4, L5, L6, and L7 omit reference numerals in the drawings. In the following detailed description, the object-side surface or image sensor-side surface of the lens(es) may be assigned the reference denotation 'Sd' while referring to the natural number 'd', and the reference numerals omitted from the drawings may be easily appreciated through the tables described below in connection with the lens data of the embodiments or by referring to FIG. 5. In the tables described below, the symbol '*' may be added to the lens surface, which is an aspheric surface, and some reference numbers may not be actual lens surfaces. For example, the reference position of the structure which is omitted from the drawings but disposes a cover window may be denoted by 'S1' in the tables and, in specifying the position of the structure considered in the design of the lens assembly 400, the reference numeral of the lens surface may be given in the tables although omitted from the drawings. In some embodiments, 'sto' may be added to the surface provided as an aperture among the lens surfaces, and 'S17' and 'S18' may denote the object-side surface and the image sensor-side of the infrared cut filter F.

In the following detailed description, the term "concave" or "convex" is used in describing the shapes of the object-side surfaces or image sensor-side surfaces of the lenses L1, L2, L3, L4, L5, L6, and L7. The reference to the shape of the lens surface may describe the shape of the point crossing the optical axis O, unless otherwise stated. "The object-side surface is concave' may describe a shape in which the center of the radius of curvature of the object-side surface is positioned on the side of the object obj rather than the object-side surface. "The object-side surface is convex' may describe a shape in which the center of the radius of curvature of the object-side surface is positioned on the side of the image sensor S rather than the object-side surface. "The image sensor-side surface is concave' may describe a shape in which the center of the radius of curvature of the image sensor-side surface is positioned on the side of the image sensor S rather than the image sensor-side surface. "The image sensor-side surface is convex' may describe a shape in which the center of the radius of curvature of the image sensor-side surface is positioned on the side of the object obj rather than the image sensor-side surface. For example, in FIG. 5, the object-side surface S2 of the first lens L1 may be understood as convex, and the image sensor-side surface S16 of the seventh lens L7 may be understood as concave.

According to an embodiment, at least one of the lenses L1, L2, L3, L4, L5, L6, and L7 may be an aspheric lens including an inflection point IP. "Inflection point IP" may mean a boundary between an area where the center of the radius of curvature is positioned on the object obj side and an area where the center of the radius of curvature is positioned on the image sensor S side in one lens surface. For example, the chief portion of the object-side surface S15 of the sixth lens L6 may have the center of the radius of curvature positioned on the image sensor S side, and the marginal portion around the chief portion may have the center of the radius of curvature positioned on the object obj side. The point at which the position of the radius of curvature is changed may be referred to as an inflection point IP. When the lens assembly 400 includes at least one aspheric lens or at least one aspheric lens including an inflection point IP, it may be easy to mitigate field curvature.

In the embodiment to be described below, the 'overall length OAL' of the lens assembly 400 may describe the distance from the object-side surface S2 of the first lens L1 to the imaging plane img on the optical axis O. In an embodiment, the 'back focal length bfl(LL)" of the lens assembly 400 may be the distance between the first lens (e.g., the seventh lens L7) from the image sensor S and the image sensor S (e.g., the imaging plane img) and may be the distance measured along a direction parallel to the optical axis O. In another embodiment, the 'Y-image height YIH' of the lens assembly 400, the image sensor S, or the imaging plane img may be understood as the maximum image height of, e.g., the image sensor S or the imaging plane img. 'Image height" may be defined as the distance between any one point on the imaging plane img and the optical axis O (e.g., a point crossing the optical axis O on the imaging plane img). In an embodiment, when the imaging plane img has a rectangular shape including long edges LE and short edges SE, the Y-image height YIH or the maximum image height may be understood as half of the diagonal length of the imaging plane img.

The first lens L1 which is first disposed from the object obj side includes an object-side surface S2 having a positive refractive power and being convex. When the first lens L1 has positive refractive power, the size of the overall luminous flux is reduced, making it easy to downsize the lens assembly 400 and to reduce the f-number to 2.0 or less. According to an embodiment, when the first lens L1 is an aspheric lens, it may be easy to correct spherical aberration. As the first lens L1 has an Abbe's number Vd1 of about 80 or more, the lens assembly may be further reduced in size than other lens assemblies having the same brightness (e.g., F-number) and have higher brightness performance than other lens assemblies with the same size. According to the invention, the lens assembly 400 has a F-number Fno of about 1.85 or less and is about 1.8 or more. In the invention, considering the refractive power distribution or arrangement of the lenses L1, L2, L3, L4, L5, L6, and L7 in the lens assembly 400, the Abbe's number Vd1 of the first lens L1 is limited to about 90 or less. In an embodiment, at least one of the lenses L1, L2, L3, L4, L5, L6, and L7 (e.g., the first lens) may include a glass material in securing conditions regarding the brightness performance or Abbe's number of the lens assembly 400. In another embodiment, considering ease of manufacture in shaping the lenses L1, L2, L3, L4, L5, L6, and L7, at least one of the lenses L1, L2, L3, L4, L5, L6, and L7 may include a plastic material. For example, the material of the lens(es) L1, L2, L3, L4, L5, L6, and L7 may be appropriately selected considering design specifications of the lens assembly 400 or ease of manufacture.

The second lens L2 disposed second from the object obj side includes a convex object-side surface S4 having negative refractive power. The third lens L3 disposed third from the object obj side includes a convex object-side surface S7 having positive refractive power. The fourth lens L4 disposed fourth from the object obj side includes a concave object-side surface S9 having negative refractive power. While having the refractive power and lens surface shapes of the first to fourth lenses L1, L2, L3, and L4, the lens assembly 400 meets the condition of Equation 1 below.

[Equation 1]

$$\frac{f(L-1)}{f(L)} \le -1.5$$

Here, 'f(L-1)' is the focal length of the second lens ( the sixth lens L6) from the image sensor S side, and 'f(L)' is the focal length of the first lens ( the seventh lens L7) from the image sensor S side. In an embodiment, in the lens assembly 400, the calculated value according to Equation 1 may be about -1.6 or more. According to an embodiment, when the condition of Equation 1 is met, the lens assembly 400 may secure the relative illumination necessary for obtaining an image in an area that has been enlarged about 1.065 times the Y-image height YIH. For example, in the image stabilization operation, although the lens(es) L1, L2, L3, L4, L5, L6, and L7 and the image sensor S move relative to each other on a plane perpendicular to the optical axis O, the lens assembly 400 may obtain an image of good quality. If the relative displacement of the lens(es) L1, L2, L3, L4, L5, L6, and L7 and the image sensor S is allowed by an angle of about 1.5 degrees in a general image stabilization operation, when the condition of Equation 1 is met, the relative displacement of the lens(es) L1, L2, L3, L4, L5, L6, and L7 and the image sensor S may be allowed up to an angle of about 3.0 degrees. For example, the lens assembly 400 according to an embodiment of the disclosure may enhance the image stabilization performance or quality of the obtained image by meeting the condition of Equation 1.

According to an embodiment, the lens assembly 400 may have a back focal length bfl(LL) meeting the condition of Equation 2 below.

$$[\text{Equation 2}]$$

$$1.05 \leq bfl(LL)$$

The back focal length bfl(LL) is the distance between the first lens (e.g., the seventh lens L7) on the side of the image sensor S and the imaging plane img as mentioned above, and the unit may be 'mm'. According to an embodiment, by meeting the condition of Equation 2, the degree of design freedom in disposing the infrared cut filter F may be increased. In another embodiment, as a sufficient distance is secured between the seventh lens L7 and the image sensor S, even when the diameters of the lens(es) L1, L2, L3, L4, L5, L6, and L7 reduce, the lens assembly 400 may provide optical performance to match the image sensor S of a sufficiently large size (e.g., about 1/1.2 inch to 1 inch size). In an embodiment, the back focal length bfl(LL) may be about 1.15 mm or less.

According to an embodiment, the lens assembly 400 may meet the following condition of Equation 3 in the correlation between the overall length OAL and the Y-image height YIH.

$$[\text{Equation 3}]$$

$$\frac{OAL}{YIH} \leq 1.22$$

For example, as described above, the lens assembly 400 may be downsized while the image stabilization performance or image quality is enhanced. In an embodiment, the calculated value of Equation 3 may be about 1.16 or more.

According to an embodiment, in the lens assembly 400, the refractive index of the fifth lens L5 may be about 1.59 or more to implement a modulation transfer function (MTF) and control aberration. When the refractive index of the fifth lens L5 is less than 1.59, aberration control may be difficult or the image quality of the marginal portion may be degraded. In an embodiment, the refractive index of the fifth lens L5 may be 1.65 or less.

According to an embodiment, the lens assembly 400 may meet the condition of Equation 4 below in the overall focal length f and the focal length f1 of the first lens L1.

$$[\text{Equation 4}]$$

$$0.9 \leq \frac{f}{f1} \leq 1.1$$

For example, in the relationship between the total focal length f and the focal length f1 of the first lens L1, over the upper limit of Equation 4, aberration correction (e.g., correction of spherical aberration) may be difficult due to the refractive power of the first lens L1 and, below the lower limit, it may be difficult to correct the coma aberration and to reduce the size of the lens assembly 400.

According to an embodiment, in the thickness of the first to fourth lenses L1, L2, L3, and L4, the lens assembly 400 may meet the condition of Equation 5 below. In Equation 5, 'Dd' may be the thickness of the dth lens along the optical axis.

[Equation 5]

$$\frac{D2+D3+D4}{D1} \le 1$$

In an embodiment, when the lens assembly 400 meets the condition of Equation 5, it may be easy to design the refractive power distribution and arrangement of the lenses L1, L2, L3, L4, L5, L6, and L7 as well as to implement a modulation transfer function or control aberrations. In an embodiment, in the relation between the thicknesses of the first to fourth lenses L1, L2, L3, and L4, the calculated value according to Equation 5 may be about 0.85 or more.

According to an embodiment, the lens assembly 400 may further include an optical member R disposed on the object obj side than the first lens L1. The optical member R may reflect or refract the external light incident along a first direction d1 crossing the optical axis O to travel in a second direction d2. The second direction d2 may be substantially parallel to the optical axis O, for example. For example, when the optical member R is included, the lens assembly 400 may obtain an image of the subject or object obj_r disposed in the first direction d1. In an embodiment, the first direction d1 may be substantially parallel to the Z-axis direction of FIG. 3 or 4, and the second direction d2 or the optical axis O may be substantially parallel to the XY plane of FIG. 3 or 4. The lens assembly 400 may guide or focus light traveling in the second direction d2 to the image sensor S. In another embodiment, the lens assembly 400 may not include the optical member R. When the optical member R is not included, the optical axis O may be disposed parallel to any one of the X-axis, Y-axis, or Z-axis of FIG. 3 or 4. In another embodiment, the lens assembly 400 may further include a second optical member (not shown). For example, the second optical member may be disposed between the first lens (e.g., the seventh lens L7) on the side of the image sensor S and the image sensor S and refract or reflect the light, guided or focused by the lenses L1, L2, L3, L4, L5, L6, and L7 to be incident along the optical axis O direction, in a direction crossing the optical axis O and guide it to the image sensor S. For example, unlike the illustrated embodiment, the image sensor S may be disposed to receive light in a direction crossing the optical axis O shown in FIG. 5.

As described above, the lens assembly 400 according to embodiments may reduce the F-number and extend the angular range in the image stabilization operation by controlling the Abbe's number of the first lens L1 and the focal lengths of the sixth lens L6 and seventh lens L7. In an embodiment, the lens assembly 400 may easily be downsized by securing a distance between the first lens (e.g., the seventh lens L7) on the side of the image sensor S and the image sensor S and have an enhanced freedom of design in disposing the infrared cut filter F. In another embodiment, considering aberration correction, the focal length of the first lens L1 relative to the entire focal length of the lens assembly 400 may be properly selected in a designated range.

[Embodiment 1]

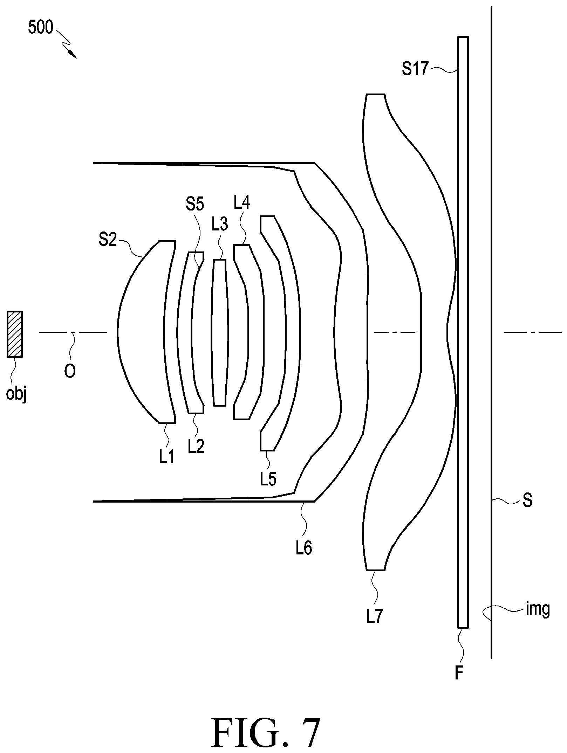

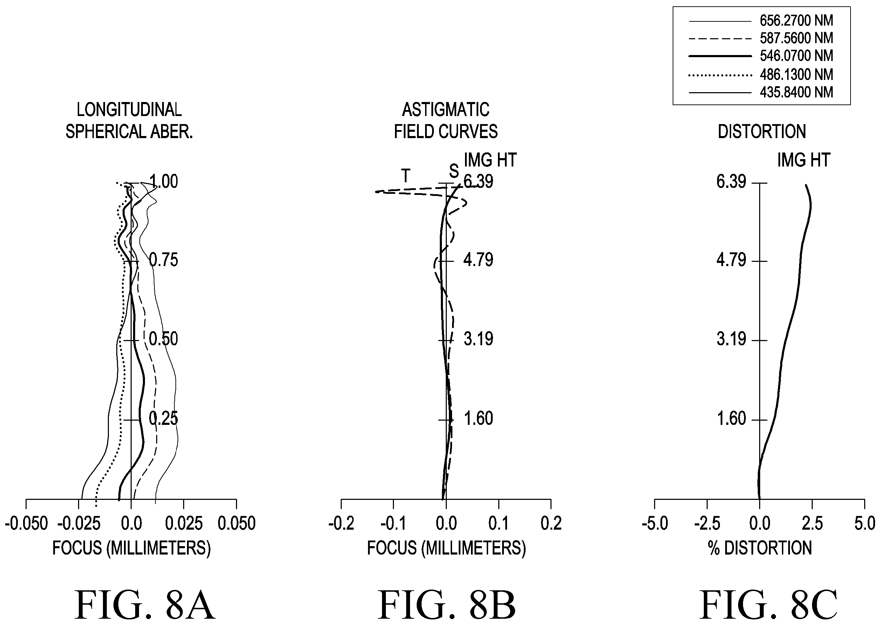

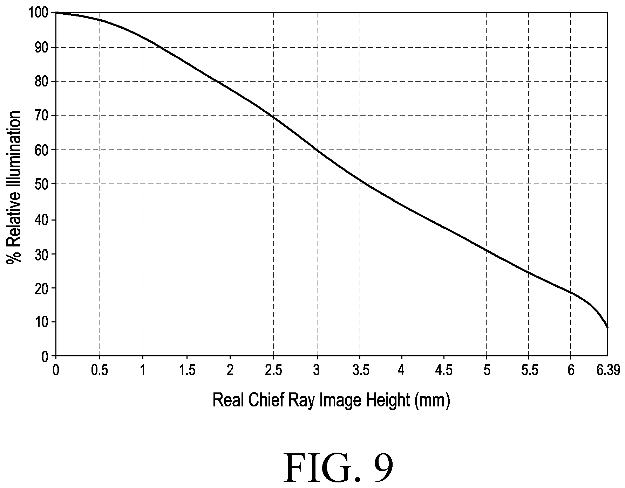

FIG. 7 is a view illustrating a configuration of a lens assembly 500 (e.g., the lens assembly 400 of FIG. 5) according to an embodiment of the disclosure. FIGS. 8A, 8B, and 8C are graphs illustrating spherical aberration, astigmatism, and distortion rate of a lens assembly 500 according to an embodiment of the disclosure. FIG. 9 is a graph illustrating the relative illumination of a lens assembly 500 according to an embodiment of the disclosure.

FIG. 8A is a graph showing the spherical aberration of the lens assembly 500 according to one of embodiments of the disclosure. The horizontal axis denotes the coefficient of the longitudinal spherical aberration, and the vertical axis denotes the normalized distance from the center of the optical axis. Variations in the longitudinal spherical aberration according to the wavelength of light are shown. FIG. 8B is a graph illustrating astigmatism of the lens assembly 500 according to one of embodiments of the disclosure, and FIG. 8C is a graph illustrating a distortion rate of the lens assembly 500 according to one of embodiments of the disclosure. FIG. 9 exemplifies the relative illumination according to the distance from the optical axis O on the imaging plane img, with the illumination of the point crossing the optical axis O defined as 100%, on the imaging plane img.

In the lens assembly 500 of FIG. 7, the image sensor-side surface S5 of the second lens L2 may be provided as an aperture, and the lens assembly 500 may further include an optical member(s) (e.g., the optical member R of FIG. 5) for refracting or reflecting the incident light. In an embodiment, the focal length of the lens assembly 500 may be about 6.29 mm, the field of view (FOV) may be about 85.2 degrees, and the F-number may be about 1.81. In the absence of the image stabilization operation, the lens assembly 500 has a Y-image height YIH of about 6.0 mm, and the Y-image height YIH in the image stabilization operation may be extended to about 6.39 mm. The lens assembly 500 and/or the lenses L1, L2, L3, L4, L5, L6, and L7 may be manufactured to have the specifications shown in Table 1 while meeting the above-described conditions regarding refractive power, lens surface shape and/or refractive index.

[Table 1]

| lens surface | radius of curvature | thickness or Air gap | effective radius | material | focal length | Refractive index | Abbe number |
|---|---|---|---|---|---|---|---|
| Obj | Infinity | 1000 | | | | | |
| S1 | Infinity | -0.814 | 1.784 | | | | |
| S2* | 2.256 | 0.930 | 1.783 | glass | 6.33 | 1.50 | 81.62 |
| S3* | 6.869 | 0.230 | 1.686 | | | | |
| S4* | 7.570 | 0.250 | 1.566 | plastic | -33.27 | 1.67 | 19.24 |
| S5(sto)* | 5.594 | 0.281 | 1.440 | | | | |
| S6 | Infinity | 0.000 | 1.430 | | | | |
| S7* | 12.750 | 0.290 | 1.428 | plastic | 37.80 | 1.54 | 55.93 |
| S8* | 33.063 | 0.299 | 1.410 | | | | |
| S9* | -50.141 | 0.316 | 1.453 | plastic | -27.63 | 1.67 | 19.24 |
| S10* | 30.042 | 0.331 | 1.697 | | | | |
| S11* | 21.706 | 0.298 | 1.935 | plastic | -60.27 | 1.61 | 25.96 |
| S12* | 13.659 | 0.479 | 2.282 | | | | |
| S13* | 3.889 | 0.637 | 2.980 | plastic | 7.74 | 1.57 | 37.40 |
| S14* | 30.678 | 0.985 | 3.308 | | | | |
| S15* | 7.233 | 0.495 | 4.520 | plastic | -4.96 | 1.53 | 55.71 |
| S16* | 1.900 | 0.199 | 4.663 | | | | |
| S17 | Infinity | 0.210 | 5.679 | glass | infinity | 1.52 | 64.20 |
| S18 | Infinity | 0.000 | 5.766 | | | | |
| S19 | Infinity | 0.837 | 5.766 | | | | |
| img | Infinity | 0.004 | 6.390 | | | | |

Tables 2, 3, and 4 below show the aspheric coefficients of the first to seventh lenses L1 to L7, and a definition of aspherical surface may be obtained by Equation 6 as follows:

[Equation 6]

$$z=\frac{c'y^2}{1+\sqrt{1-(k+1)c'^2y^2}}+Ay^4+By^6+Cy^8+Dy^{10}+Ey^{12}+Fy^{14}+Gy^{16}+Hy^{18}+Jy^{20}+Ky^{22}+Ly^{24}+My^{26}+Ny^{28}+Oy^{30}$$

Here, 'z' may mean the distance from the vertex of the lens in the direction of the optical axis O, 'y' the distance in the direction perpendicular to the optical axis O, 'c' the reciprocal of the radius of curvature at the vertex of the lens, 'k' the conic constant, and each of 'A', 'B', 'C', 'D', 'E', 'F', 'G', 'H', 'J', ' K', 'L', 'M', 'N', and 'O' the aspheric coefficient.

[Table 2]

| | S2 | S3 | S4 | S5 | S7 |
|---|---|---|---|---|---|
| k | -5.34797E-01 | -2.62339E+00 | 9.97071E+00 | 4.17299E+00 | 1.16422E+00 |
| A | 7.58564E-02 | -1.30879E-02 | 1.57935E-02 | 2.15860E-02 | -6.74898E-02 |
| B | 9.49628E-04 | -1.31719E-03 | 2.17399E-02 | 1.81710E-02 | 3.30173E-03 |
| C | -2.94898E-03 | -1.15789E-03 | 2.80804E-03 | 4.62075E-03 | 3.83254E-03 |
| D | -1.37334E-03 | -6.65752E-04 | -3.27185E-05 | 1.11608E-03 | 9.30795E-04 |

EP 4 239 387 B1

(continued)

|   | S2 | S3 | S4 | S5 | S7 |
|---|---|---|---|---|---|
| E | -5.37043E-04 | -2.83835E-04 | -3.11020E-04 | 1.41169E-04 | -2.65264E-05 |
| F | -1.89106E-04 | -7.73682E-05 | -1.53883E-04 | -9.16915E-05 | -8.00868E-05 |
| G | -7.60901E-05 | 1.53772E-06 | -4.48032E-05 | -8.80450E-05 | -8.33985E-05 |
| H | -2.66552E-05 | 1.16192E-05 | -1.30276E-06 | -6.16519E-05 | -3.19227E-05 |
| J | -7.03003E-06 | 8.69490E-06 | 8.48532E-06 | -2.61065E-05 | -2.28228E-05 |
| K | 0.00000E+00 | 0.00000E+00 | 8.78783E-06 | -1.15902E-05 | -4.14343E-06 |
| L | 0.00000E+00 | 0.00000E+00 | 5.65968E-06 | -1.29734E-06 | -6.11607E-06 |
| M | 0.00000E+00 | 0.00000E+00 | 3.13426E-06 | -1.64399E-06 | -1.93594E-06 |
| N | 0.00000E+00 | 0.00000E+00 | 5.52450E-07 | 1.97258E-06 | -3.49619E-06 |
| O | 0.00000E+00 | 0.00000E+00 | -5.63074E-07 | 1.52986E-06 | 2.08436E-06 |

[Table 3]

|   | S8 | S9 | S10 | S11 | S12 |
|---|---|---|---|---|---|
| k | 7.88199E+01 | 3.93878E+00 | -2.78663E+01 | 2.49845E+00 | -1.09259E+01 |
| A | -8.77567E-02 | -2.35821E-01 | -3.36028E-01 | -5.55221E-01 | -8.12507E-01 |
| B | -2.63176E-03 | -1.43737E-02 | -6.38206E-03 | -3.68192E-03 | 1.79317E-01 |
| C | 1.20142E-03 | -1.47902E-03 | 5.40950E-03 | -2.42370E-02 | -4.22633E-02 |
| D | -9.13800E-06 | -8.00806E-04 | 5.06572E-03 | 1.34060E-02 | 1.11023E-02 |
| E | -2.66176E-04 | -5.75775E-04 | 2.36079E-03 | 6.93619E-03 | -2.87752E-03 |
| F | -9.10905E-05 | -1.52311E-04 | 1.57089E-03 | 5.82984E-03 | 7.52543E-04 |
| G | -5.07548E-05 | -7.31025E-05 | 5.29561E-04 | 1.16929E-03 | -1.56625E-03 |
| H | -1.14522E-05 | -2.81970E-05 | 1.22800E-04 | -7.18918E-04 | 1.86524E-04 |
| J | -8.60156E-06 | -3.14450E-05 | -5.99091E-05 | -1.16528E-03 | 3.93219E-04 |
| K | 1.43333E-07 | -2.27541E-05 | -6.62833E-05 | -6.42136E-04 | 1.57043E-04 |
| L | -2.03201E-06 | -1.66794E-05 | -5.08359E-05 | -2.53627E-04 | -2.96813E-04 |
| M | -6.35804E-07 | -9.37198E-06 | -2.81744E-05 | -1.85629E-05 | -1.25382E-04 |
| N | 9.28054E-07 | -5.37501E-06 | -1.45755E-05 | 2.94245E-05 | 1.14816E-05 |
| O | 6.38679E-08 | -2.06093E-06 | -5.42079E-06 | 2.58505E-05 | 4.22799E-05 |

[Table 4]

|   | S13 | S14 | S15 | S16 |
|---|---|---|---|---|
| k | -1.67013E+01 | 2.45237E+00 | -6.84320E+00 | -9.47812E+00 |
| A | -1.51822E+00 | -1.24274E+00 | -3.13485E+00 | -3.27473E+00 |
| B | 1.93592E-01 | -3.09069E-02 | 1.52707E+00 | 8.88496E-01 |
| C | 1.37976E-01 | 6.85658E-02 | -7.28069E-01 | -2.35849E-01 |
| D | -3.78668E-02 | 3.80572E-03 | 3.51833E-01 | 1.41660E-01 |
| E | -2.81592E-02 | 2.72965E-03 | -1.76692E-01 | -5.88349E-02 |
| F | 5.05275E-03 | -1.21807E-03 | 7.68777E-02 | 1.09076E-02 |
| G | 8.55107E-03 | 1.15517E-03 | -2.30253E-02 | -1.26374E-02 |
| H | -4.50367E-04 | 1.57905E-03 | 3.34845E-03 | 9.03630E-03 |

15

(continued)

|  | S13 | S14 | S15 | S16 |
|---|---|---|---|---|
| J | -2.58437E-03 | -1.33519E-03 | -1.09985E-03 | -2.33070E-03 |
| K | -5.70702E-05 | -6.37314E-04 | 4.97219E-03 | 1.53771E-03 |
| L | 5.15919E-04 | -5.11693E-04 | -5.01334E-03 | -1.59483E-03 |
| M | 1.82495E-04 | 1.96021E-04 | 3.19779E-03 | 3.71204E-04 |
| N | -1.11524E-04 | 9.72928E-05 | -1.09574E-03 | 2.42185E-05 |
| O | -2.16984E-05 | 6.91993E-05 | 1.46060E-04 | 4.86498E-05 |

[Second embodiment]

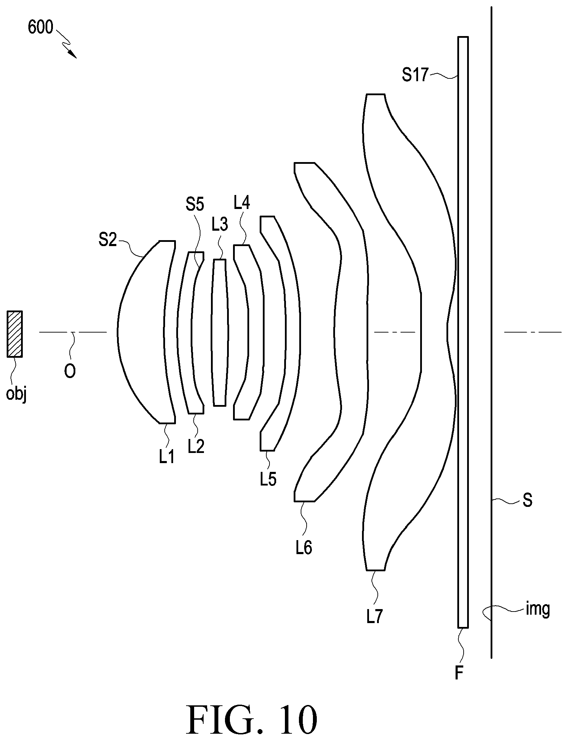

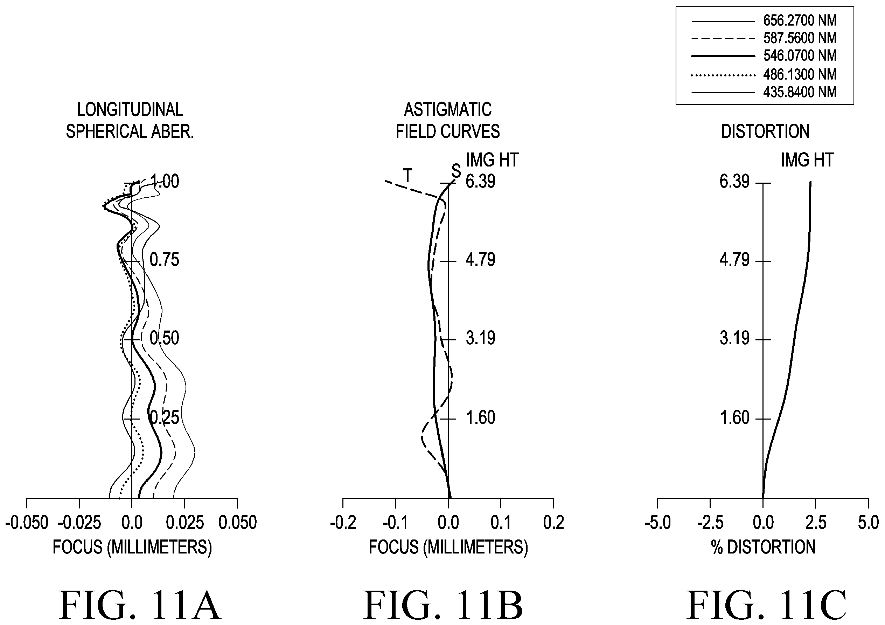

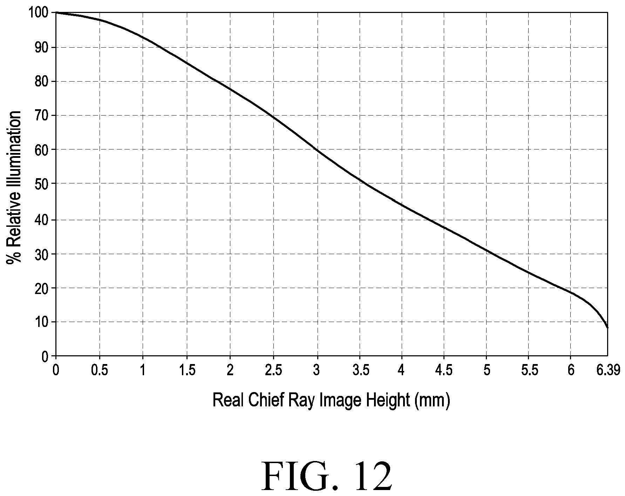

FIG. 10 is a view illustrating a configuration of a lens assembly 600 (e.g., the lens assembly 400 of FIG. 5) according to an embodiment of the disclosure. FIGS. 11A, 11B, and 11C are graphs illustrating spherical aberration, astigmatism, and distortion rate of a lens assembly 600 according to an embodiment of the disclosure. FIG. 12 is a graph illustrating the relative illumination of a lens assembly 600 according to an embodiment of the disclosure.

In the lens assembly 600 of FIG. 10, the image sensor-side surface S5 of the second lens L2 may be provided as an aperture, and the lens assembly 500 may further include an optical member(s) (e.g., the optical member R of FIG. 5) for refracting or reflecting the incident light. In an embodiment, the focal length of the lens assembly 600 may be about 6.33 mm, the field of view may be about 85.2 degrees, and the F-number may be about 1.81. In the absence of the image stabilization operation, the lens assembly 600 has a Y-image height YIH of about 6.0 mm, and the Y-image height YIH in the image stabilization operation may be extended to about 6.39 mm. The lens assembly 600 and/or the lenses L1, L2, L3, L4, L5, L6, and L7 may be manufactured to have the specifications shown in Table 5 while meeting the above-described conditions regarding refractive power, lens surface shape and/or refractive index and may have the aspheric coefficients of Tables 6 to 8.

[Table 5]

| lens surface | radius of curvature | thickness or Air gap | effective radius | material | focal length | Refractive index | Abbe number |
|---|---|---|---|---|---|---|---|
| Obj | infinity | 1000 | | | | | |
| S1 | infinity | -0.814 | 1.784 | | | | |
| S2* | 2.265 | 0.921 | 1.784 | glass | 6.34 | 1.50 | 81.46 |
| S3* | 6.932 | 0.223 | 1.689 | | | | |
| S4* | 7.723 | 0.255 | 1.579 | plastic | -32.23 | 1.67 | 19.24 |
| S5(sto)* | 5.632 | 0.283 | 1.447 | | | | |
| S6* | infinity | 0.000 | 1.439 | | | | |
| S7* | 13.324 | 0.293 | 1.435 | plastic | 35.25 | 1.54 | 55.93 |
| S8* | 42.913 | 0.290 | 1.413 | | | | |
| S9* | -36.870 | 0.331 | 1.452 | plastic | -25.76 | 1.67 | 19.24 |
| S10* | 33.395 | 0.338 | 1.707 | | | | |
| S11* | 21.153 | 0.317 | 1.967 | plastic | -63.31 | 1.61 | 25.96 |
| S12* | 13.667 | 0.497 | 2.360 | | | | |
| S13* | 3.861 | 0.639 | 3.040 | plastic | 7.78 | 1.57 | 37.40 |
| S14* | 27.863 | 0.999 | 3.333 | | | | |
| S15* | 7.438 | 0.490 | 4.573 | plastic | -5.04 | 1.53 | 55.71 |
| S16* | 1.939 | 0.202 | 4.758 | | | | |
| S17 | infinity | 0.210 | 5.717 | glass | infinity | 1.52 | 64.20 |

(continued)

| lens surface | radius of curvature | thickness or Air gap | effective radius | material | focal length | Refractive index | Abbe number |
|---|---|---|---|---|---|---|---|
| S18 | infinity | 0.000 | 5.803 | | | | |
| S19 | infinity | 0.837 | 5.803 | | | | |
| Img | infinity | -0.004 | 6.390 | | | | |

[Table 6]

| | S2 | S3 | S4 | S5 | S7 |
|---|---|---|---|---|---|
| k | -5.32268E-01 | -2.57749E+00 | 9.96211E+00 | 4.21913E+00 | 3.63084E+00 |
| A | 7.68383E-02 | -1.28715E-02 | 1.83973E-02 | 2.35065E-02 | -6.73238E-02 |
| B | 3.32661E-04 | -1.07670E-03 | 2.33049E-02 | 1.83662E-02 | 3.91316E-03 |
| C | -3.10358E-03 | -7.01213E-04 | 3.61688E-03 | 4.94364E-03 | 3.72473E-03 |
| D | -1.42836E-03 | -3.61275E-04 | 5.37273E-04 | 1.43173E-03 | 1.05766E-03 |
| E | -4.69893E-04 | -1.47851E-04 | -5.99461E-05 | 4.82830E-04 | 1.90713E-04 |
| F | -1.58511E-04 | -4.21067E-05 | -6.79498E-05 | 9.22072E-05 | 6.57300E-05 |
| G | -3.91152E-05 | 1.93790E-05 | -2.53864E-05 | 4.85605E-05 | 7.84327E-06 |
| H | -1.41652E-05 | 8.31725E-06 | -9.88397E-06 | -2.14460E-05 | 3.29866E-06 |
| J | 1.43756E-05 | -1.72122E-06 | -6.86240E-06 | -7.24429E-06 | -1.44823E-06 |
| K | 0.00000E+00 | 0.00000E+00 | -3.52850E-06 | -1.96614E-05 | -2.39045E-06 |
| L | 0.00000E+00 | 0.00000E+00 | -5.46352E-06 | -2.69198E-06 | -6.90208E-06 |
| M | 0.00000E+00 | 0.00000E+00 | -3.52331E-06 | -8.33058E-06 | -3.40618E-06 |
| N | 0.00000E+00 | 0.00000E+00 | -3.92555E-06 | 4.32493E-06 | 1.31287E-06 |
| O | 0.00000E+00 | 0.00000E+00 | 2.80907E-06 | -2.58969E-06 | 4.10605E-07 |

[Table 7]

| | S8 | S9 | S10 | S11 | S12 |
|---|---|---|---|---|---|
| k | -2.33376E+00 | 1.04149E+00 | -6.87171E+00 | -9.43262E-01 | -7.24382E+00 |
| A | -8.94218E-02 | -2.35339E-01 | -3.44349E-01 | -5.93638E-01 | -8.69734E-01 |
| B | -2.39513E-03 | -1.47840E-02 | -5.06112E-03 | -3.50017E-03 | 1.98892E-01 |
| C | 1.14661E-03 | -1.06099E-03 | 7.09586E-03 | -1.90028E-02 | -5.09946E-02 |
| D | -2.24405E-05 | -4.64167E-04 | 6.87947E-03 | 2.01523E-02 | 1.12679E-02 |
| E | -1.37019E-04 | -1.52468E-04 | 3.22992E-03 | 9.39641E-03 | -5.38699E-03 |
| F | -3.86082E-05 | 3.72834E-05 | 1.90279E-03 | 5.23250E-03 | -2.39371E-04 |
| G | -1.07235E-06 | 6.73769E-05 | 5.34212E-04 | -8.18596E-04 | -2.02070E-03 |
| H | -4.55096E-06 | 1.34155E-05 | 7.70473E-05 | -2.40304E-03 | 2.55996E-04 |
| J | 3.26424E-06 | 8.35800E-06 | -1.11363E-04 | -1.94123E-03 | 2.09138E-04 |
| K | -4.02218E-07 | -1.18249E-05 | -8.22919E-05 | -6.78946E-04 | -2.12708E-04 |
| L | 8.95534E-07 | 2.54992E-06 | -5.36472E-05 | -4.63374E-05 | -4.87371E-04 |
| M | -5.49645E-07 | -5.08274E-06 | -1.62325E-05 | 1.67486E-04 | -1.01357E-05 |
| N | 7.48175E-08 | 3.14309E-06 | 2.78474E-07 | 1.09811E-04 | 1.34229E-04 |

(continued)

|  | S8 | S9 | S10 | S11 | S12 |
|---|---|---|---|---|---|
| O | 5.84173E-09 | -4.72183E-07 | 5.03019E-06 | 4.28161E-05 | 7.52543E-05 |

[Table 8]

|  | S13 | S14 | S15 | S16 |
|---|---|---|---|---|
| k | -1.68592E+01 | 3.14680E+00 | -6.32541E+00 | -9.41403E+00 |
| A | -1.57696E+00 | -1.28852E+00 | -3.12949E+00 | -3.25320E+00 |
| B | 2.34632E-01 | -2.01929E-02 | 1.52254E+00 | 9.03240E-01 |
| C | 1.38224E-01 | 7.67367E-02 | -7.28112E-01 | -2.45115E-01 |
| D | -4.98260E-02 | 4.83222E-03 | 3.52959E-01 | 1.37027E-01 |
| E | -2.76044E-02 | 2.71611E-03 | -1.75055E-01 | -5.78843E-02 |
| F | 9.93720E-03 | -2.26522E-03 | 7.57493E-02 | 1.23255E-02 |
| G | 9.82819E-03 | 2.51590E-03 | -2.07692E-02 | -1.43444E-02 |
| H | -2.77733E-03 | 1.71820E-03 | 3.09653E-03 | 1.00903E-02 |
| J | -2.92866E-03 | -4.49319E-04 | -1.65739E-03 | -2.88539E-03 |
| K | 5.27405E-04 | -1.29049E-04 | 5.14936E-03 | 1.77223E-03 |
| L | 6.51029E-04 | -4.25363E-04 | -5.63361E-03 | -1.46231E-03 |
| M | 5.73518E-05 | 1.53305E-04 | 3.45747E-03 | 7.11423E-04 |
| N | -1.88438E-04 | 2.91990E-05 | -1.34623E-03 | -1.09078E-04 |
| O | -4.75737E-05 | -1.09008E-05 | 2.42702E-04 | -1.37752E-05 |

[Embodiment 3]

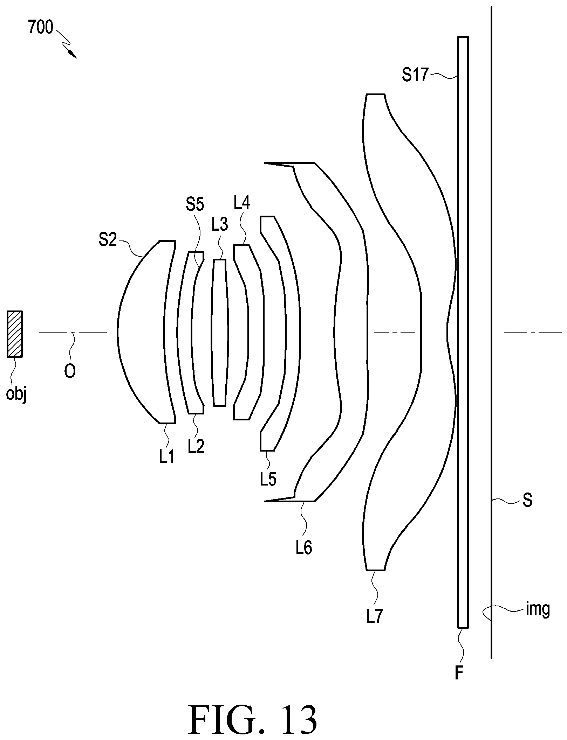

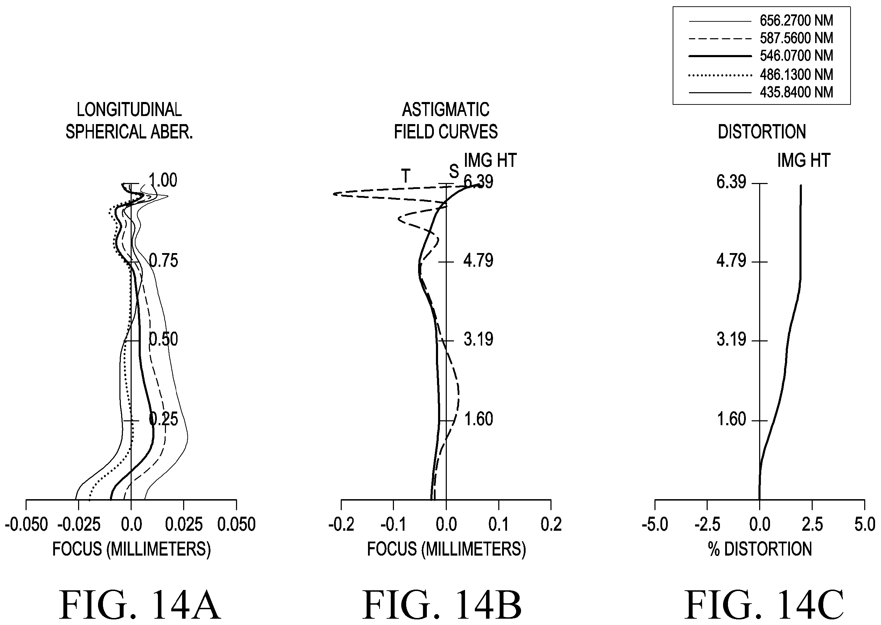

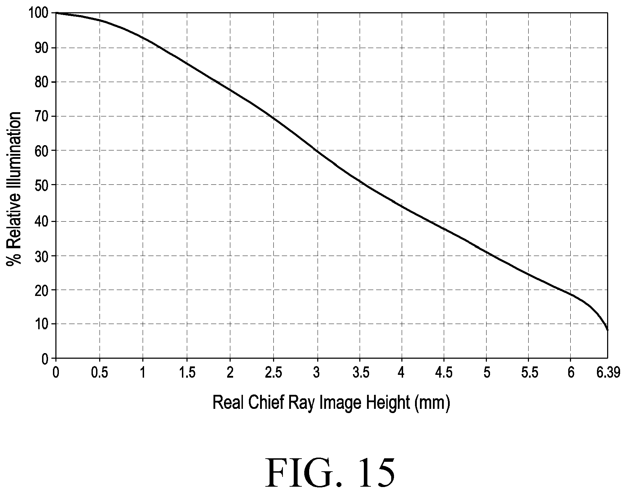

FIG. 13 is a view illustrating a configuration of a lens assembly 700 (e.g., the lens assembly 400 of FIG. 5) according to an embodiment of the disclosure. FIGS. 14A, 14B, and 14C are graphs illustrating spherical aberration, astigmatism, and distortion rate of a lens assembly 700 according to an embodiment of the disclosure. FIG. 15 is a graph illustrating the relative illumination of a lens assembly 700 according to an embodiment of the disclosure.

In the lens assembly 700 of FIG. 13, the image sensor-side surface S5 of the second lens L2 may be provided as an aperture, and the lens assembly 500 may further include an optical member(s) (e.g., the optical member R of FIG. 5) for refracting or reflecting the incident light. In an embodiment, the focal length of the lens assembly 700 may be about 6.31 mm, the field of view may be about 85.2 degrees, and the F-number may be about 1.81. In the absence of the image stabilization operation, the lens assembly has a Y-image height YIH of about 6.0 mm, and the Y-image height YIH in the image stabilization operation may be extended to about 6.39 mm. The lens assembly 700 and/or the lenses L1, L2, L3, L4, L5, L6, and L7 may be manufactured to have the specifications shown in Table 9 while meeting the above-described conditions regarding refractive power, lens surface shape and/or refractive index and may have the aspheric coefficients of Tables 10 to 12.

[Table 9]

| lens surface | radius of curvature | thickness or Air gap | effective radius | material | focal length | Refractive index | Abbe number |
|---|---|---|---|---|---|---|---|
| Obi | infinity | 1000 |  |  |  |  |  |
| S1 | infinity | -0.814 | 1.784 |  |  |  |  |
| S2* | 2.259 | 0.930 | 1.783 | glass | 6.34 | 1.50 | 81.62 |
| S3* | 6.874 | 0.227 | 1.687 |  |  |  |  |
| S4* | 7.551 | 0.251 | 1.568 | plastic | -33.32 | 1.67 | 19.24 |

(continued)

| lens surface | radius of curvature | thickness or Air gap | effective radius | material | focal length | Refractive index | Abbe number |
|---|---|---|---|---|---|---|---|
| S5(sto)* | 5.585 | 0.283 | 1.440 | | | | |
| S6* | infinity | 0.000 | 1.430 | | | | |
| S7* | 13.296 | 0.293 | 1.428 | plastic | 36.48 | 1.54 | 55.93 |
| S8* | 39.642 | 0.298 | 1.410 | | | | |
| S9* | -37.755 | 0.323 | 1.452 | plastic | -26.40 | 1.67 | 19.24 |
| S10* | 34.228 | 0.335 | 1.697 | | | | |
| S11* | 22.876 | 0.315 | 1.938 | plastic | -61.26 | 1.61 | 25.96 |
| S12* | 14.202 | 0.485 | 2.303 | | | | |
| S13* | 3.881 | 0.646 | 3.000 | plastic | 7.78 | 1.57 | 37.40 |
| S14* | 28.843 | 0.983 | 3.328 | | | | |
| S15* | 7.390 | 0.501 | 4.540 | plastic | -5.03 | 1.53 | 55.71 |
| S16* | 1.931 | 0.209 | 4.727 | | | | |
| S17 | infinity | 0.210 | 5.711 | glass | infinity | 1.52 | 64.20 |
| S18 | infinity | 0.000 | 5.796 | | | | |
| S19 | infinity | 0.821 | 5.796 | | | | |
| Img | infinity | 0.010 | 6.390 | | | | |

[Table 10]

| | S2 | S3 | S4 | S5 | S7 |
|---|---|---|---|---|---|
| k | -5.33952E-01 | -2.64185E+00 | 1.00092E+01 | 4.16405E+00 | 1.22251E+00 |
| A | 7.62336E-02 | -1.32552E-02 | 1.63789E-02 | 2.15281E-02 | -6.75821E-02 |
| B | 7.95505E-04 | -1.49705E-03 | 2.20764E-02 | 1.81604E-02 | 3.43672E-03 |
| C | -3.22163E-03 | -1.28095E-03 | 3.23303E-03 | 4.91581E-03 | 3.86301E-03 |
| D | -1.46109E-03 | -4.97413E-04 | 3.18094E-04 | 1.51983E-03 | 1.21912E-03 |
| E | -5.53441E-04 | -2.51270E-04 | -2.01445E-04 | 3.78680E-04 | 1.40522E-04 |
| F | -1.69255E-04 | -6.55912E-05 | -1.42254E-04 | 2.21946E-05 | 9.19024E-06 |
| G | -6.69029E-05 | -1.59121E-05 | -5.40693E-05 | -4.02060E-05 | -5.64935E-05 |
| H | -1.79470E-05 | 6.72512E-06 | -1.47833E-05 | -5.13591E-05 | -2.15395E-05 |
| J | -1.23252E-05 | -2.37845E-06 | 1.16534E-06 | -3.23248E-05 | -2.80904E-05 |
| K | 0.00000E+00 | 0.00000E+00 | 4.29340E-06 | -2.23768E-05 | -8.87728E-06 |
| L | 0.00000E+00 | 0.00000E+00 | 1.76314E-06 | -7.93447E-06 | -1.39054E-05 |
| M | 0.00000E+00 | 0.00000E+00 | 3.03691E-07 | -3.42557E-06 | -4.98533E-06 |
| N | 0.00000E+00 | 0.00000E+00 | 1.64773E-07 | 1.52990E-06 | -4.79416E-06 |
| O | 0.00000E+00 | 0.00000E+00 | 6.51093E-07 | -7.46911E-07 | 2.85538E-06 |

[Table 11]

| | S8 | S9 | S10 | S11 | S12 |
|---|---|---|---|---|---|
| k | 7.85991E+01 | 1.32986E+01 | -2.09232E+01 | 1.47830E-01 | -8.58376E+00 |
| A | -8.77506E-02 | -2.35377E-01 | -3.36404E-01 | -5.58892E-01 | -8.26172E-01 |

(continued)

| | S8 | S9 | S10 | S11 | S12 |
|---|---|---|---|---|---|
| B | -2.58654E-03 | -1.44347E-02 | -6.41668E-03 | -3.44769E-03 | 1.84836E-01 |
| C | 1.16117E-03 | -1.36571E-03 | 5.33131E-03 | -2.40792E-02 | -4.37332E-02 |
| D | 1.05508E-04 | -5.88645E-04 | 5.25858E-03 | 1.40602E-02 | 1.15224E-02 |
| E | -1.74329E-04 | -3.55256E-04 | 2.47762E-03 | 7.08063E-03 | -3.40160E-03 |
| F | -6.76700E-05 | -1.04509E-04 | 1.49286E-03 | 5.73289E-03 | 6.51963E-04 |
| G | -3.39719E-05 | -2.42198E-05 | 5.37155E-04 | 1.04613E-03 | -1.66046E-03 |
| H | -9.96742E-06 | -3.11970E-05 | 1.08305E-04 | -7.39264E-04 | 2.03449E-04 |
| J | -6.88695E-06 | -1.35535E-05 | -2.92219E-05 | -1.20589E-03 | 2.98623E-04 |
| K | -4.00821E-06 | -2.21772E-05 | -6.06414E-05 | -6.61744E-04 | 1.42281E-04 |
| L | -2.13511E-06 | -6.24352E-06 | -3.47924E-05 | -2.83110E-04 | -3.11683E-04 |
| M | -1.87948E-06 | -9.20942E-06 | -2.88190E-05 | -1.29183E-05 | -1.14042E-04 |
| N | 6.67982E-07 | -2.29720E-06 | -1.05165E-05 | 2.32749E-05 | -1.28349E-05 |
| O | -4.58525E-07 | -4.69694E-06 | -7.26349E-06 | 2.97060E-05 | 4.76933E-05 |

[Table 12]

| | S13 | S14 | S15 | S16 |
|---|---|---|---|---|
| k | -1.67839E+01 | 2.54547E+00 | -6.52073E+00 | -9.48919E+00 |
| A | -1.53078E+00 | -1.26609E+00 | -3.11183E+00 | -3.21907E+00 |
| B | 2.03012E-01 | -2.58520E-02 | 1.50599E+00 | 8.61086E-01 |
| C | 1.37816E-01 | 7.31680E-02 | -7.14690E-01 | -2.34719E-01 |
| D | -3.97542E-02 | 4.35215E-03 | 3.45047E-01 | 1.34375E-01 |
| E | -2.81288E-02 | 2.66308E-03 | -1.70773E-01 | -5.08820E-02 |
| F | 5.95183E-03 | -1.62714E-03 | 7.11831E-02 | 1.16702E-02 |
| G | 8.64338E-03 | 1.18066E-03 | -2.06963E-02 | -1.34920E-02 |
| H | -9.34926E-04 | 1.66254E-03 | 2.22064E-03 | 8.88890E-03 |
| J | -2.61479E-03 | -1.24943E-03 | -1.97100E-03 | -2.04181E-03 |
| K | 1.68108E-04 | -5.79163E-04 | 5.54655E-03 | 1.64322E-03 |
| L | 5.29541E-04 | -5.19769E-04 | -5.04142E-03 | -1.66565E-03 |
| M | 1.10981E-04 | **2.10777E-04** | 3.02759E-03 | 2.12079E-04 |
| N | -1.50348E-04 | 6.68350E-05 | -9.20855E-04 | 6.60346E-05 |
| O | 2.07866E-05 | 9.10392E-05 | 1.12679E-04 | 3.93254E-05 |

[Embodiment 4]

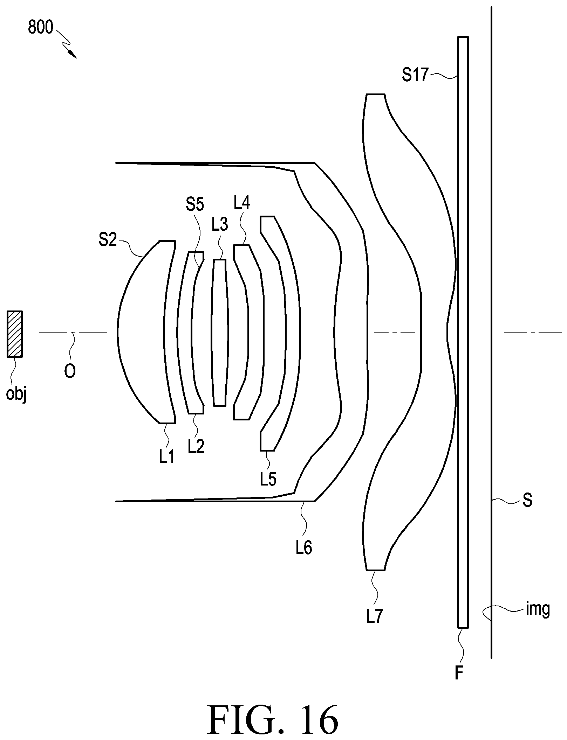

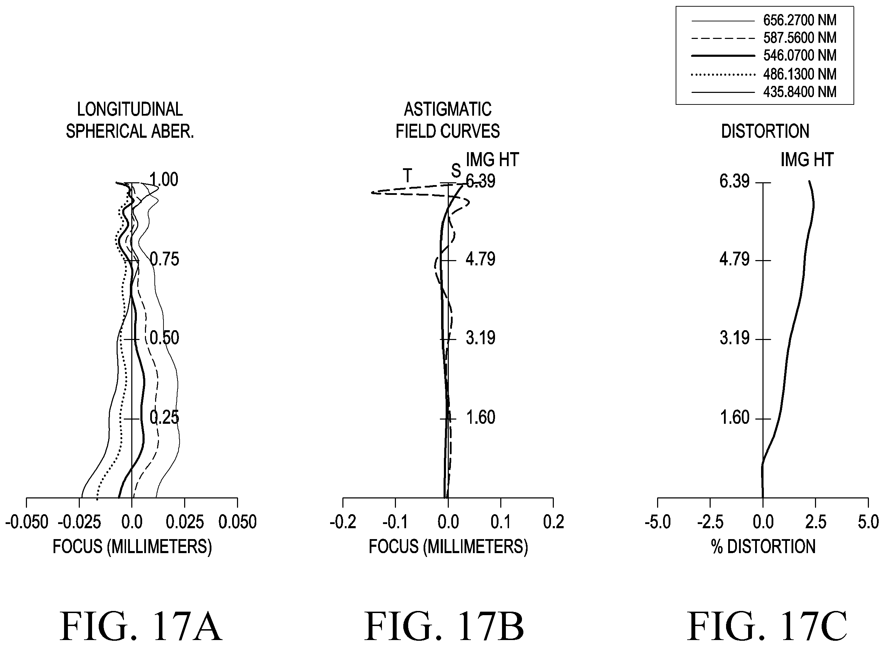

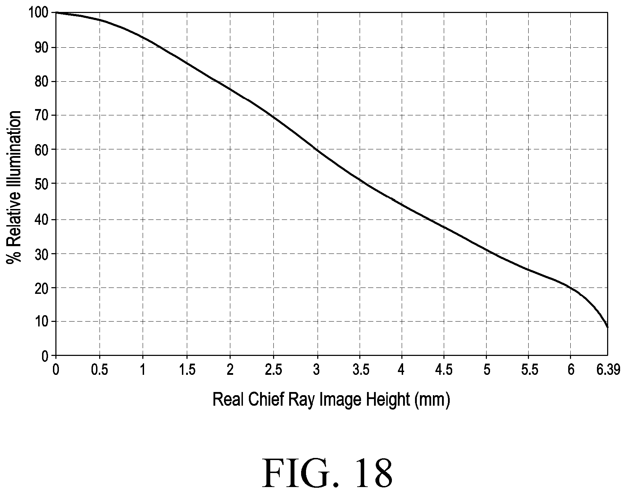

FIG. 16 is a view illustrating a configuration of a lens assembly 800 (e.g., the lens assembly 400 of FIG. 5) according to an embodiment of the disclosure. FIGS. 17A, 17B, and 17C are graphs illustrating spherical aberration, astigmatism, and distortion rate of a lens assembly 800 according to an embodiment of the disclosure. FIG. 18 is a graph illustrating the relative illumination of a lens assembly 800 according to an embodiment of the disclosure.

In the lens assembly 800 of FIG. 16, the image sensor-side surface S5 of the second lens L2 may be provided as an aperture, and the lens assembly 500 may further include an optical member(s) (e.g., the optical member R of FIG. 5) for refracting or reflecting the incident light. In an embodiment, the focal length of the lens assembly 800 may be about 6.29 mm, the field of view may be about 85.2 degrees, and the F-number may be about 1.81. In the absence of the image stabilization operation, the lens assembly 800 has a Y-image height YIH of about 6.0 mm, and the Y-image height YIH in the image stabilization operation may be extended to about 6.39 mm. The lens assembly 800 and/or the lenses L1, L2, L3, L4, L5, L6, and L7 may be manufactured to have the specifications shown in Table 13 while meeting the above-described conditions regarding refractive power, lens surface shape and/or refractive index and may have the aspheric coefficients of Tables 14 to 16.

[Table 13]

| lens surface | radius of curvature | thickness or Air gap | effective radius | material | focal length | Refractive index | Abbe number |
|---|---|---|---|---|---|---|---|
| Obj | infinity | 1000 | | | | | |
| S1 | infinity | -0.814 | 1.784 | | | | |
| S2* | 2.256 | 0.931 | 1.783 | glass | 6.33 | 1.50 | 81.62 |
| S3* | 6.866 | 0.229 | 1.686 | | | | |
| S4* | 7.552 | 0.250 | 1.566 | plastic | -33.12 | 1.67 | 19.24 |
| S5(sto)* | 5.578 | 0.281 | 1.440 | | | | |
| S6 | infinity | 0.000 | 1.430 | | | | |
| S7* | 12.890 | 0.290 | 1.427 | plastic | 37.16 | 1.54 | 55.93 |
| S8* | 35.032 | 0.297 | 1.410 | | | | |
| S9* | -42.422 | 0.317 | 1.461 | plastic | -27.32 | 1.67 | 19.24 |
| S10* | 33.051 | 0.332 | 1.722 | | | | |
| S11* | 22.074 | 0.301 | 1.965 | plastic | -59.89 | 1.61 | 25.96 |
| S12* | 13.772 | 0.480 | 2.351 | | | | |
| S13* | 3.881 | 0.641 | 2.980 | plastic | 7.70 | 1.57 | 37.40 |
| S14* | 31.332 | 0.980 | 3.313 | | | | |
| S15* | 7.251 | 0.502 | 4.520 | plastic | -4.93 | 1.53 | 55.71 |
| S16* | 1.892 | 0.207 | 4.700 | | | | |
| S17 | infinity | 0.210 | 5.707 | glass | infinity | 1.52 | 64.20 |
| S18 | infinity | 0.000 | 5.793 | | | | |
| S19 | infinity | 0.827 | 5.793 | | | | |
| Img | infinity | 0.006 | 6.390 | | | | |

[Table 14]

| | S2 | S3 | S4 | S5 | S7 |
|---|---|---|---|---|---|
| k | -5.34295E-01 | -2.63991E+00 | 9.98548E+00 | 4.17007E+00 | 1.28171E+00 |
| A | 7.60206E-02 | -1.32683E-02 | 1.59052E-02 | 2.16159E-02 | -6.73891E-02 |
| B | 9.26081E-04 | -1.44443E-03 | 2.17643E-02 | 1.82516E-02 | 3.22670E-03 |
| C | -2.97819E-03 | -1.23836E-03 | 2.79465E-03 | 4.56890E-03 | 3.77978E-03 |
| D | -1.38597E-03 | -7.12425E-04 | -1.23890E-04 | 1.05243E-03 | 9.69728E-04 |
| E | -5.49496E-04 | -3.04048E-04 | -3.54273E-04 | 4.09487E-05 | -7.70194E-05 |
| F | -1.91142E-04 | -9.19496E-05 | -2.15045E-04 | -1.90462E-04 | -1.39958E-04 |
| G | -8.11787E-05 | -1.23783E-05 | -8.05303E-05 | -1.79189E-04 | -1.51171E-04 |
| H | -3.76606E-05 | 2.81766E-06 | -2.10190E-05 | -1.22907E-04 | -7.56619E-05 |
| J | -1.31773E-05 | 6.59981E-08 | 4.29173E-06 | -7.11687E-05 | -5.61506E-05 |
| K | 0.00000E+00 | 0.00000E+00 | 1.31460E-05 | -3.11878E-05 | -1.61702E-05 |

(continued)

|   | S2 | S3 | S4 | S5 | S7 |
|---|---|---|---|---|---|
| L | 0.00000E+00 | 0.00000E+00 | 1.19021E-05 | -9.59071E-06 | -1.27415E-05 |
| M | 0.00000E+00 | 0.00000E+00 | 8.45464E-06 | 2.91091E-06 | 1.37615E-06 |
| N | 0.00000E+00 | 0.00000E+00 | 4.84375E-06 | 8.90364E-06 | 3.40522E-06 |
| O | 0.00000E+00 | 0.00000E+00 | 2.43828E-06 | 6.22866E-06 | 7.99547E-06 |

[Table 15]

|   | S8 | S9 | S10 | S11 | S12 |
|---|---|---|---|---|---|
| k | 7.83492E+01 | 4.44021E+00 | -2.91405E+01 | 3.36191E+00 | -1.04840E+01 |
| A | -8.77726E-02 | -2.42092E-01 | -3.54808E-01 | -5.90258E-01 | -8.68675E-01 |
| B | -2.63754E-03 | -1.52781E-02 | -2.99310E-03 | -3.00490E-03 | 1.95975E-01 |
| C | 1.15496E-03 | -1.76806E-03 | 9.19811E-03 | -1.97451E-02 | -5.04833E-02 |
| D | 8.38683E-05 | -9.46336E-04 | 7.64820E-03 | 1.92163E-02 | 1.02286E-02 |
| E | -2.35263E-04 | -6.22686E-04 | 3.63107E-03 | 9.12324E-03 | -6.21695E-03 |
| F | -8.68717E-05 | -2.36608E-04 | 1.90005E-03 | 5.22361E-03 | -1.47265E-03 |
| G | -6.06984E-05 | -1.49004E-04 | 3.50121E-04 | -1.09520E-03 | -2.96757E-03 |
| H | -1.66334E-05 | -9.92731E-05 | -1.51525E-04 | -2.67037E-03 | -2.45502E-04 |
| J | -1.71640E-05 | -6.84501E-05 | -2.82770E-04 | -2.21799E-03 | -2.85317E-04 |
| K | -5.12559E-06 | -4.92491E-05 | -2.13433E-04 | -9.48632E-04 | -6.65571E-04 |
| L | -3.50464E-06 | -2.88505E-05 | -1.37587E-04 | -2.53903E-04 | -6.62790E-04 |
| M | -4.56274E-07 | -1.99412E-05 | -8.01120E-05 | 4.64824E-05 | -2.19714E-05 |
| N | 1.87838E-07 | -5.37315E-06 | -3.30725E-05 | 7.09765E-05 | 1.58280E-04 |
| O | -1.89194E-06 | -5.57316E-07 | -1.12940E-05 | 3.64827E-05 | 6.82881E-05 |

[Table 16]

|   | S13 | S14 | S15 | S16 |
|---|---|---|---|---|
| k | -1.67515E+01 | 8.93247E+00 | -6.80321E+00 | -9.71721E+00 |
| A | -1.51752E+00 | -1.19755E+00 | -3.12872E+00 | -2.97702E+00 |
| B | 1.92529E-01 | -3.93020E-02 | 1.52001E+00 | 7.41372E-01 |
| C | 1.37443E-01 | 6.37667E-02 | -7.23988E-01 | -2.21535E-01 |
| D | -3.71618E-02 | 3.18529E-03 | 3.50445E-01 | 1.17703E-01 |
| E | -2.81450E-02 | 2.67601E-03 | -1.74460E-01 | -3.63423E-02 |
| F | 4.98188E-03 | -1.71434E-03 | 7.45873E-02 | 1.30494E-02 |
| G | 8.52445E-03 | 1.11256E-03 | -2.23288E-02 | -1.23214E-02 |
| H | -5.35356E-04 | 1.83404E-03 | 2.78099E-03 | 5.32686E-03 |
| J | -2.42097E-03 | -6.52912E-04 | -1.64156E-03 | -1.99628E-03 |
| K | -7.35164E-05 | -4.31069E-04 | 5.31388E-03 | 1.77884E-03 |
| L | 4.78634E-04 | -5.19233E-04 | -5.34993E-03 | -7.54376E-04 |
| M | 1.64846E-04 | 6.98789E-05 | 3.27076E-03 | 3.83472E-05 |
| N | -8.62719E-05 | 4.37794E-05 | -1.14074E-03 | 2.17662E-05 |

(continued)

|   | S13 | S14 | S15 | S16 |
|---|---|---|---|---|
| O | -2.02835E-05 | 6.79116E-05 | 1.34514E-04 | 9.51505E-07 |

[Embodiment 5]

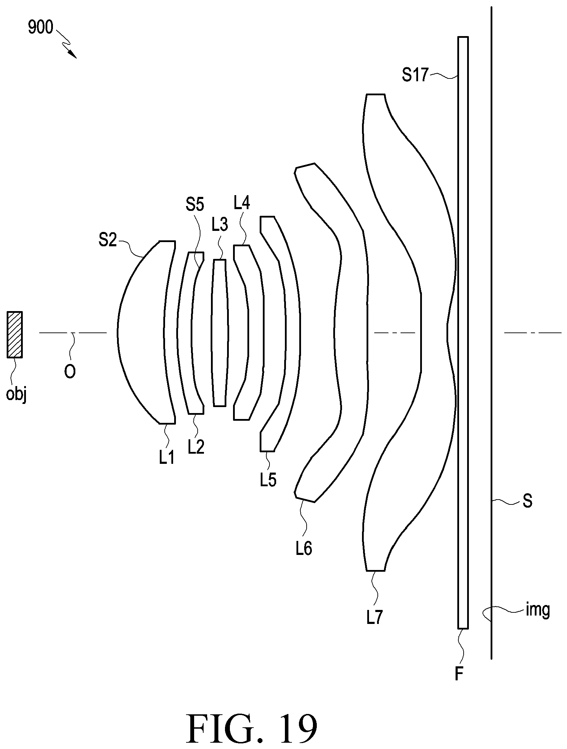

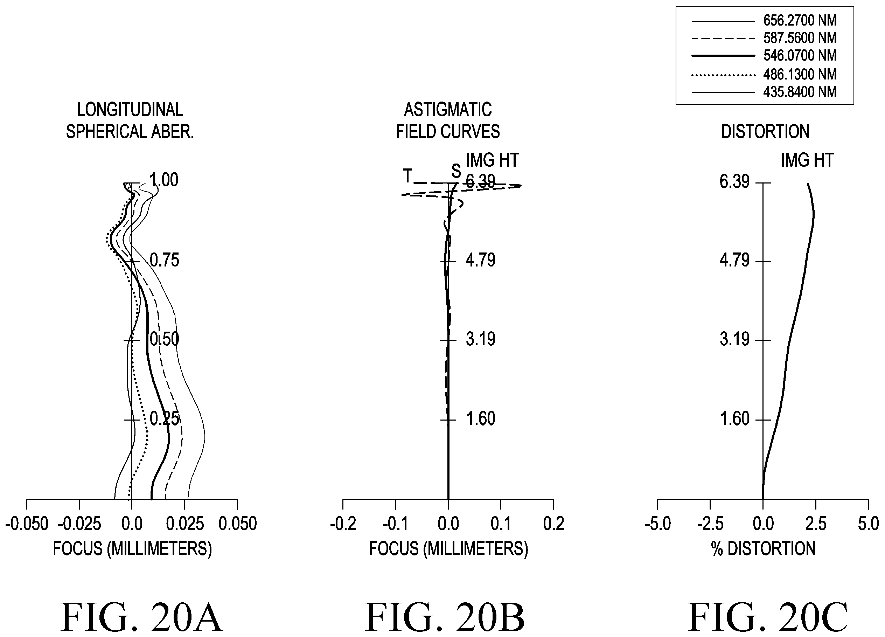

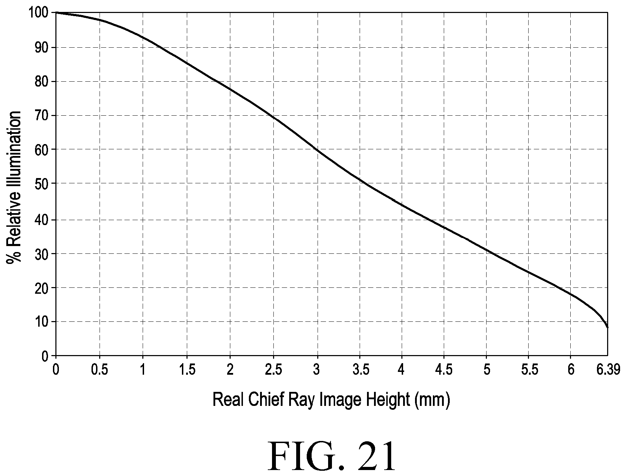

FIG. 19 is a view illustrating a configuration of a lens assembly 900 (e.g., the lens assembly 400 of FIG. 5) according to an embodiment of the disclosure. FIGS. 20A, 20B, and 20C are graphs illustrating spherical aberration, astigmatism, and distortion rate of a lens assembly 900 according to an embodiment of the disclosure. FIG. 21 is a graph illustrating the relative illumination of a lens assembly 900 according to an embodiment of the disclosure.

In the lens assembly 900 of FIG. 19, the image sensor-side surface S5 of the second lens L2 may be provided as an aperture, and the lens assembly 500 may further include an optical member(s) (e.g., the optical member R of FIG. 5) for refracting or reflecting the incident light. In an embodiment, the focal length of the lens assembly 900 may be about 6.31 mm, the field of view may be about 85.2 degrees, and the F-number may be about 1.81. In the absence of the image stabilization operation, the lens assembly has a Y-image height YIH of about 6.0 mm, and the Y-image height YIH in the image stabilization operation may be extended to about 6.39 mm. The lens assembly 900 and/or the lenses L1, L2, L3, L4, L5, L6, and L7 may be manufactured to have the specifications shown in Table 17 while meeting the above-described conditions regarding refractive power, lens surface shape and/or refractive index and may have the aspheric coefficients of Tables 18 to 20.

[Table 17]

| lens surface | radius of curvature | thickness or Air gap | effective radius | material | focal length | Refractive index | Abbe number |
|---|---|---|---|---|---|---|---|
| obj | infinity | 1000 | | | | | |
| S1 | infinity | -0.814 | 1.784 | | | | |
| S2* | 2.248 | 0.967 | 1.784 | glass | 6.28 | 1.50 | 81.62 |
| S3* | 6.884 | 0.243 | 1.678 | | | | |
| S4* | 7.662 | 0.251 | 1.557 | plastic | -32.18 | 1.67 | 19.24 |
| S5(sto)* | 5.598 | 0.274 | 1.430 | | | | |
| S6* | infinity | 0.000 | 1.420 | | | | |
| S7* | 12.467 | 0.287 | 1.417 | plastic | 37.53 | 1.54 | 55.93 |
| S8* | 31.557 | 0.296 | 1.400 | | | | |
| S9* | -46.655 | 0.329 | 1.446 | plastic | -27.44 | 1.67 | 19.24 |
| S10* | 31.094 | 0.330 | 1.706 | | | | |
| S11* | 22.470 | 0.290 | 1.961 | plastic | -61.52 | 1.61 | 25.96 |
| S12* | 14.070 | 0.467 | 2.310 | | | | |
| S13* | 3.910 | 0.639 | 2.980 | plastic | 7.97 | 1.57 | 37.40 |
| S14* | 26.293 | 0.964 | 3.273 | | | | |
| S15* | 5.488 | 0.464 | 4.440 | plastic | -5.03 | 1.54 | 55.93 |
| S16* | 1.777 | 0.500 | 4.684 | | | | |
| S17 | infinity | 0.210 | 5.904 | glass | infinity | 1.52 | 64.20 |
| S18 | infinity | 0.000 | 5.992 | | | | |
| S19 | infinity | 0.549 | 5.992 | | | | |
| img | infinity | -0.009 | 6.390 | | | | |

[Table 18]

|   | S2 | S3 | S4 | S5 | S7 |
|---|---|---|---|---|---|
| k | -5.32146E-01 | -2.68564E+00 | 9.92461E+00 | 4.15165E+00 | 1.25104E+00 |
| A | 7.63141E-02 | -1.30458E-02 | 1.37650E-02 | 1.94342E-02 | -6.59404E-02 |
| B | 1.91484E-03 | -1.73875E-03 | 2.08202E-02 | 1.77100E-02 | 2.54520E-03 |
| C | -2.60607E-03 | -1.11969E-03 | 2.65219E-03 | 4.43599E-03 | 3.70064E-03 |
| D | -1.20758E-03 | -5.38130E-04 | 2.59745E-06 | 1.05336E-03 | 8.52340E-04 |
| E | -4.88729E-04 | -2.31336E-04 | -2.54478E-04 | 9.77001E-05 | -6.76120E-05 |
| F | -1.54777E-04 | -5.08867E-05 | -1.15848E-04 | -9.87385E-05 | -1.15058E-04 |
| G | -7.11810E-05 | 6.56557E-06 | -3.08476E-05 | -9.25361E-05 | -9.30476E-05 |
| H | -2.15959E-05 | 1.48503E-05 | 3.34338E-06 | -6.17398E-05 | -3.86332E-05 |
| J | -1.38074E-05 | 4.74184E-06 | 7.31386E-06 | -3.31812E-05 | -2.23427E-05 |
| K | 0.00000E+00 | 0.00000E+00 | 7.45385E-06 | -1.63388E-05 | -5.22461E-06 |
| L | 0.00000E+00 | 0.00000E+00 | 3.17706E-06 | -5.67333E-06 | -5.15960E-06 |
| M | 0.00000E+00 | 0.00000E+00 | 2.13785E-06 | -1.12405E-06 | -1.44827E-06 |
| N | 0.00000E+00 | 0.00000E+00 | -5.47090E-07 | 3.58103E-06 | -7.42070E-07 |
| O | 0.00000E+00 | 0.00000E+00 | -9.82612E-07 | 2.44594E-06 | 2.21166E-06 |

[Table 19]

|   | S8 | S9 | S10 | S11 | S12 |
|---|---|---|---|---|---|
| k | 7.53694E+01 | 3.22595E+01 | -5.14796E+01 | 2.50354E-01 | -1.27913E+01 |
| A | -8.52023E-02 | -2.30791E-01 | -3.43138E-01 | -5.85017E-01 | -8.37969E-01 |
| B | -2.88999E-03 | -1.39763E-02 | -6.39821E-03 | -2.98676E-03 | 1.87984E-01 |
| C | 1.27851E-03 | -1.35896E-03 | 5.49404E-03 | -1.95654E-02 | -4.44471E-02 |
| D | 3.80966E-05 | -9.42555E-04 | 4.86799E-03 | 1.79025E-02 | 1.03138E-02 |
| E | -2.49810E-04 | -5.87122E-04 | 2.48836E-03 | 9.43420E-03 | -3.87385E-03 |
| F | -1.08136E-04 | -2.50143E-04 | 1.63304E-03 | 6.15426E-03 | 4.27231E-05 |
| G | -4.71178E-05 | -8.84086E-05 | 6.12213E-04 | -4.34973E-06 | -1.84348E-03 |
| H | -1.41946E-05 | -5.18437E-05 | 1.63093E-04 | -1.86440E-03 | 5.69961E-04 |
| J | -8.97590E-06 | -2.74501E-05 | -2.48225E-05 | -1.75376E-03 | 4.38727E-04 |
| K | -4.91049E-06 | -2.62121E-05 | -4.86711E-05 | -6.94829E-04 | -1.08127E-04 |
| L | -4.21139E-06 | -1.05744E-05 | -4.03849E-05 | -1.55304E-04 | -5.43475E-04 |
| M | -2.03154E-06 | -1.14242E-05 | -2.81419E-05 | 1.00746E-04 | -7.39198E-05 |
| N | 1.21455E-07 | -1.99346E-06 | -1.37840E-05 | 7.24630E-05 | 9.38980E-05 |
| O | 3.35271E-07 | -3.03983E-06 | -5.48472E-06 | 4.16140E-05 | 9.44814E-05 |

[Table 20]

|   | S13 | S14 | S15 | S16 |
|---|---|---|---|---|
| k | -1.66018E+01 | -7.59690E+00 | -9.20702E+00 | -8.44180E+00 |
| A | -1.54049E+00 | -1.27662E+00 | -3.12549E+00 | -3.31203E+00 |
| B | 2.22672E-01 | -3.76221E-02 | 1.52595E+00 | 9.48390E-01 |
| C | 1.38138E-01 | 8.01756E-02 | -7.17244E-01 | -2.50721E-01 |

(continued)

|   | S13 | S14 | S15 | S16 |
|---|---|---|---|---|
| D | -4.68590E-02 | 7.09901E-03 | 3.30842E-01 | 1.38415E-01 |
| E | -2.87467E-02 | 2.51905E-03 | -1.65680E-01 | -6.93537E-02 |
| F | 7.99210E-03 | -2.39791E-04 | 7.42933E-02 | 1.44745E-02 |
| G | 9.23929E-03 | 1.63146E-03 | -2.64395E-02 | -1.14788E-02 |
| H | -1.30152E-03 | 1.70787E-03 | 4.13068E-03 | 1.17699E-02 |
| J | -3.18279E-03 | -1.90634E-03 | -3.48491E-03 | -2.95956E-03 |
| K | 1.40481E-04 | -8.84041E-04 | 5.15407E-03 | 1.63733E-03 |
| L | 6.94550E-04 | -6.30233E-04 | -4.88724E-03 | -2.10133E-03 |
| M | 2.38045E-04 | 3.13185E-04 | 3.19839E-03 | 2.73996E-04 |
| N | -1.46944E-04 | 1.52476E-04 | -8.71867E-04 | -7.91328E-05 |
| O | 9.68315E-06 | 1.49422E-04 | 2.45961E-04 | 1.27980E-04 |

The lens assemblies 500, 600, 700, 800, and 900 of the above-described embodiments 1 to 5 may have a low F-number and an extended image stabilization range by having the following calculation values regarding Equation 1 to Equation 5.

[Table 21]

|   | embodiment 1 | embodiment 2 | embodiment 3 | embodiment 4 | embodiment 5 |
|---|---|---|---|---|---|
| [Equation 1] | -1.56 | -1.54 | -1.55 | -1.56 | -1.58 |
| [Equation 2] | 1.09 | 1.08 | 1.09 | 1.09 | 1.08 |
| [Equation 3] | 1.18 | 1.19 | 1.19 | 1.18 | 1.18 |
| [Equation 4] | 0.993 | 0.998 | 0.995 | 0.994 | 1.00 |
| [Equation 5] | 0.92 | 0.95 | 0.93 | 0.92 | 0.9 |

As described above, according to the disclosure, a lens assembly (e.g., the lens assembly 400 of FIG. 5) and/or an electronic device (e.g., the electronic device 101, 102, 104, or 300 of FIGS. 1 to 4) including the same comprises at least seven lenses (e.g., the lenses L1, L2, L3, L4, L5, L6, and L7 of FIG. 5) sequentially arranged along an optical axis (e.g., the optical axis O of FIG. 5) direction from an object (e.g., the object obj of FIG. 5) side to an image sensor (e.g., the image sensor S of FIG. 5) side. A first lens (e.g., the first lens L1 of FIG. 5) first disposed from the object side among the at least seven lenses includes a convex object-side surface (e.g., the surface denoted by 'S2' of FIG. 5) having a positive refractive power. A second lens (e.g., the second lens L2 of FIG. 5) second disposed from the object side among the at least seven lenses includes a convex object-side surface (e.g., the surface denoted by 'S4' of FIG. 5) having a negative refractive power. A third lens (e.g., the third lens L3 of FIG. 5) third disposed from the object side among the at least seven lenses includes a convex object-side surface (e.g., the surface denoted by 'S7' of FIG. 5) having a positive refractive power. A fourth lens (e.g., the fourth lens L4 of FIG. 5) fourth disposed from the object side among the at least seven lenses includes a concave object-side surface (e.g., the surface denoted by 'S9' of FIG. 5) having a negative refractive power. The lens assembly meets Conditional equation 1 and Conditional equation 2.

$$[\text{Conditional equation 1}]$$

$$80 \leq Vd1$$

[Conditional equation 2]

$$\frac{f(L-1)}{f(L)} \leq -1.5$$

wherein 'Vd1' is an Abbe's number of the first lens, 'f(L-1)' is a focal length of the second lens (e.g., the sixth lens L6 of FIG. 5) from the image sensor side, and 'f(L)' is a focal length of the first lens (e.g., the seventh lens L7 of FIG. 5) from the image sensor side.

According to an embodiment, the lens assembly and/or the electronic device further comprises an aperture (e.g., the image sensor-side surface S5 of the second lens L2 of FIG. 5) disposed between the second lens and the third lens.

According to an embodiment, the lens assembly and/or the electronic device meets Conditional equation 3 below.

[Conditional equation 3]

$$1.05 \leq bfl(LL)$$

wherein 'bfl(LL)' is a distance between the first lens from the image sensor side among the at least seven lenses and the image sensor (e.g., the imaging plane img of FIG. 5), measured in mm along a direction parallel to the optical axis.

According to an embodiment, the lens assembly and/or the electronic device meets Conditional equation 4 below.

[Conditional equation 4]

$$\frac{OAL}{YIH} \leq 1.22$$

wherein 'OAL' is a distance measured on the optical axis from an object-side surface (e.g., the surface denoted by 'S2' of FIG. 5) of the first lens to an imaging plane of the image sensor, and 'YIH' is a maximum image height (e.g., the Y-image height YIH of FIG. 6) of the imaging plane.

According to an embodiment, the lens assembly and/or the electronic device meets Conditional equation 5 below.

[Conditional equation 5]

$$Fno \leq 1.85$$

wherein 'Fno' is an F number of the lens assembly.

According to an embodiment, the lens assembly and/or the electronic device meets Conditional equation 6 below.

[Conditional equation 6]

$$1.59 \leq N5$$

wherein 'N5' is a refractive index of a fifth lens (e.g., the fifth lens L5 of FIG. 5) fifth disposed from the object side among the at least seven lenses.

According to an embodiment, the lens assembly and/or the electronic device meets Conditional equation 7 below.

[Conditional equation 7]

$$0.9 \leq \frac{f}{f1} \leq 1.1$$

wherein 'f is an overall focal length of the lens assembly, and 'f1' is a focal length of the first lens.

According to an embodiment, the lens assembly and/or the electronic device meets Conditional equation 8 below.

[Conditional equation 8]

$$\frac{D2+D3+D4}{D1} \leq 1$$

wherein 'D1' is a thickness of the first lens on the optical axis, 'D2' is a thickness of the second lens on the optical axis, 'D3' is a thickness of the third lens on the optical axis, and 'D4' is a thickness of the fourth lens on the optical axis.

According to an embodiment, at least one of the at least seven lenses is an aspheric lens including an inflection point (e.g., the inflection point IP of FIG. 5).

According to an embodiment, at least the first lens among the at least seven lenses includes a glass material.

According to an embodiment, at least one lens among the at least seven lenses is configured to move back and forth along a direction of the optical axis.

According to an embodiment, the lens assembly and/or the electronic device including the same further comprises the image sensor configured to receive light focused or guided through the at least seven lenses.

According to an embodiment, the lens assembly and/or the electronic device including the same further comprises an optical member (e.g., the optical member R of FIG. 5) disposed on the object side rather than the first lens to receive external light in a first direction crossing the optical axis direction and reflect or refract the light in a direction parallel to the optical axis.

According to the disclosure, an electronic device (e.g., the electronic device 101, 102, 104, or 300 of FIGS. 1 to 4) comprises the lens assembly (e.g., the lens assembly 400 of FIG. 5) according to the disclosure.

According to an embodiment, the electronic device further comprises the image sensor configured to receive light focused or guided through the at least seven lenses, the image sensor being aligned with the at least seven lenses on the optical axis.

According to an embodiment of the disclosure, an electronic device (e.g., the electronic device 101, 102, 104, or 300 of FIGS. 1 to 4) comprises at least seven lenses (e.g., the lenses L1, L2, L3, L4, L5, L6, and L7 of FIG. 5) sequentially arranged along an optical axis (e.g., the optical axis O of FIG. 5) direction from an object (e.g., the object obj of FIG. 5) side to an image sensor (e.g., the image sensor S of FIG. 5) side, the image sensor preferably aligned with the at least seven lenses on the optical axis and configured to receive light focused and guided by the at least seven lenses, and a processor (e.g., the processor 120 of FIG. 1 or the image signal processor 260 of FIG. 2) configured to obtain an image based on light received by the image sensor. According to the embodiment, a first lens (e.g., the first lens L1 of FIG. 5) first disposed from the object side among the at least seven lenses includes a convex object-side surface (e.g., the surface denoted by 'S2' of FIG. 5) having a positive refractive power. According to the embodiment, a second lens (e.g., the second lens L2 of FIG. 5) second disposed from the object side among the at least seven lenses includes a convex object-side surface (e.g., the surface denoted by 'S4' of FIG. 5) having a negative refractive power. According to the embodiment, a third lens (e.g., the third lens L3 of FIG. 5) third disposed from the object side among the at least seven lenses includes a convex object-side surface (e.g., the surface denoted by 'S7' of FIG. 5) having a positive refractive power. According to the embodiment, a fourth lens (e.g., the fourth lens L4 of FIG. 5) fourth disposed from the object side among the at least seven lenses includes a concave object-side surface (e.g., the surface denoted by 'S9' of FIG. 5) having a negative refractive power. According to the embodiment, the electronic device meets Conditional equation 9 and Conditional equation 10.

[Conditional equation 9]

$$80 \leq Vd1$$

[Conditional equation 10]

$$\frac{f(L-1)}{f(L)} \leq -1.5$$

wherein 'Vd1' is an Abbe's number of the first lens, 'f(L-1)' is a focal length of the second lens (e.g., the sixth lens L6 of FIG. 5) from the image sensor side, and 'f(L)' is a focal length of the first lens (e.g., the seventh lens L7 of FIG. 5) from the image sensor side.

According to an embodiment, the electronic device meets Conditional equation 11.

[Conditional equation 11]

$$1.05 \leq bfl(LL)$$

wherein 'bfl(LL)' is a distance between the first lens from the image sensor side among the at least seven lenses and the image sensor (e.g., the imaging plane img of FIG. 5), measured in mm along a direction parallel to the optical axis.

According to an embodiment, the electronic device meets Conditional equation 12.

[Conditional equation 12]

$$\frac{OAL}{YIH} \leq 1.22$$

wherein 'OAL' is a distance measured on the optical axis from an object-side surface of the first lens to an imaging plane of the image sensor, and 'YIH' is a maximum image height (e.g., the Y-image height YIH of FIG. 6) of the imaging plane.

According to an embodiment, the electronic device meets Conditional equation 13 below.

[Conditional equation 13]

$$Fno \leq 1.85$$

wherein 'Fno' is an F number of the lens assembly.

According to an embodiment, the electronic device meets Conditional equation 14 below.

[Conditional equation 14]

$$1.59 \leq N5$$

wherein 'N5' is a refractive index of a fifth lens (e.g., the fifth lens L5 of FIG. 5) fifth disposed from the object side among the at least seven lenses.

According to an embodiment, the electronic device meets Conditional equation 15.

[Conditional equation 15]

$$0.9 \leq \frac{f}{f1} \leq 1.1$$

wherein 'f' is an overall focal length of the lens assembly, and 'f1' is a focal length of the first lens. According to an embodiment, the electronic device meets Conditional equation 16.

[Conditional equation 16]

$$\frac{D2+D3+D4}{D1} \leq 1$$

wherein 'D1' is a thickness of the first lens on the optical axis, 'D2' is a thickness of the second lens on the optical axis, 'D3' is a thickness of the third lens on the optical axis, and 'D4' is a thickness of the fourth lens on the optical axis.

While the disclosure has been described and shown in connection with various embodiments, it should be appreciated that various embodiments are intended as limiting the invention but as illustrative. It will be apparent to one of ordinary skill in the art that various changes may be made in form and detail without departing from the overall scope of the appended set of claims.

**Claims**

1. A lens assembly (400) comprising,

no more than seven lenses (L1-L7) sequentially arranged along an optical axis (O) direction from an object (obj) side to an image sensor (S) side,
wherein a first lens (L1) first disposed from the object (obj) side among the seven lenses (L1-L7) includes a convex object-side surface (S2) and a concave image sensor-side surface, and having a positive refractive power,
wherein a second lens (L2) second disposed from the object (obj) side among the seven lenses (L1-L7) includes a convex object-side surface (S4) and a concave image sensor-side surface, and having a negative refractive power,
wherein a third lens (L3) third disposed from the object (obj) side among the seven lenses (L1-L7) includes a convex object-side surface (S7) and a concave image sensor-side surface, and having a positive refractive power,
wherein a fourth lens (L4) fourth disposed from the object (obj) side among the seven lenses (L1-L7) includes a concave object-side surface (S9) and a concave image sensor-side surface, and having a negative refractive power,
wherein a fifth lens (L5) fifth disposed from the object (obj) side among the seven lenses (L1-L7) includes a convex object-side surface and a concave image sensor-side surface, and having a negative refractive power,
wherein a sixth lens (L6) sixth disposed from the object (obj) side among the seven lenses (L1-L7) includes a convex object-side surface and a concave image sensor-side surface, and having a positive refractive power,
wherein a seventh lens (L7) seventh disposed from the object (obj) side among the seven lenses (L1-L7) includes a convex object-side surface and a concave image sensor-side surface, and having a negative refractive power, and
wherein the lens assembly (400) meets Conditional equation 1, Conditional equation 2, and Conditional equation 5,

[Conditional equation 1]
$$80 \leq Vd1 \leq 90$$

[Conditional equation 2]
$$\frac{f(L-1)}{f(L)} \leq -1.5$$

[Conditional equation 5]
$$1.8 < Fno \leq 1.85$$

wherein 'Vd1' is an Abbe's number of the first lens (L1), 'f(L-1)' is a focal length of the second lens (L6) from the image sensor (S) side, 'f(L)' is a focal length of the first lens (L7) from the image sensor (S) side, and 'Fno' is an F number of the lens assembly (400).

2. The lens assembly (400) of claim 1, further comprising an aperture (S5) disposed between the second lens (L2) from the object (obj) side and the third lens (L3) from the object (obj) side.

3. The lens assembly (400) of claim 1 or 2, wherein the lens assembly (400) meets Conditional equation 3,

[Conditional equation 3]

$$1.05 \leq bfl(LL)$$

wherein 'bfl(LL)' is a distance between the first lens (L7) from the image sensor (S) side among the seven lenses (L1-L7) and the image sensor (S), measured in mm along a direction parallel to the optical axis (O).

4. The lens assembly (400) of any of the preceding claims, wherein the lens assembly (400) meets Conditional equation 4,

[Conditional equation 4]

$$\frac{OAL}{YIH} \leq 1.22$$

wherein 'OAL' is a distance measured on the optical axis (O) from an object-side (obj) surface (S2) of the first lens (L1) from the object (obj) side to an imaging plane (img) of the image sensor (S), and 'YIH' is a maximum image height of the imaging plane (img).

5. The lens assembly (400) of any of the preceding claims, wherein the lens assembly (400) meets Conditional equation 6,

[Conditional equation 6]

$$1.59 \leq N5$$

wherein 'N5' is a refractive index of the fifth lens (L5) fifth disposed from the object (obj) side among the seven lenses (L1-L7).

6. The lens assembly (400) of any of the preceding claims, wherein the lens assembly (400) meets Conditional equation 7,

[Conditional equation 7]

$$0.9 \leq \frac{f}{f1} \leq 1.1$$

wherein 'f is an overall focal length of the lens assembly (400), and 'f1' is a focal length of the first lens (L1) from the object (obj) side.

7. The lens assembly (400) of any of the preceding claims, wherein the lens assembly (400) meets Conditional equation 8,

[Conditional equation 8]

$$\frac{D2+D3+D4}{D1} \leq 1$$

wherein 'D1' is a thickness of the first lens (L1) from the object (obj) side on the optical axis (O), 'D2' is a thickness of the second lens (L2) from the object (obj) side on the optical axis (O), 'D3' is a thickness of the third lens (L3) from the object (obj) side on the optical axis (O), and 'D4' is a thickness of the fourth lens (L4) from the object (obj) side on the optical axis (O).

8. The lens assembly (400) of any of the preceding claims, wherein at least one (L6) of the seven lenses (L1-L7) is an aspheric lens including an inflection point (IP).

9. The lens assembly (400) of any of the preceding claims, wherein at least the first lens (L1) from the object (obj) side among the seven lenses (L1-L7) includes a glass material

10. The lens assembly (400) of any of the preceding claims, wherein at least one lens (L1-L7) among the seven lenses (L1-L7) is configured to move back and forth along a direction of the optical axis (O).

11. The lens assembly (400) of any of the preceding claims, further comprising the image sensor (S) configured to receive light focused or guided through the seven lenses (L1-L7).

12. The lens assembly (400) of any of the preceding claims, further comprising an optical member (R) disposed on the object side (obj) rather than the first lens (L1) from the object (obj) side to receive external light in a first direction (d1) crossing the optical axis (O) direction and reflect or refract the light in a direction (d2) parallel to the optical axis (O).

13. An electronic device (101, 102, 104, 300) comprising,

the lens assembly (400) according to any one of the preceding claims; and
a processor (120, 260) configured to obtain an image based on light received by the image sensor (S).

14. The electronic device (101, 102, 104, 300) of claim 13, further comprising the image sensor (S) configured to receive light focused or guided through the seven lenses (L1-L7), the image sensor (S) being preferably aligned with the seven lenses (L1-L7) on the optical axis (O)

**Patentansprüche**

1. Linsenanordnung (400), umfassend,

nicht mehr als sieben Linsen (L1-L7), die entlang einer Richtung einer optischen Achse (O) von einer Seite eines Objekts (obj) zu einer Seite eines Bildsensor (S) sequenziell angeordnet sind,
wobei eine erste Linse (L1), die als erste von der Seite des Objekts (obj) aus den sieben Linsen (L1-L7) angeordnet ist, eine konvexe objektseitige Fläche (S2) und eine konkave bildsensorseitige Fläche beinhaltet und eine positive Brechkraft aufweist,
wobei eine zweite Linse (L2), die als zweite von der Seite des Objekts (obj) aus den sieben Linsen (L1-L7) angeordnet ist, eine konvexe objektseitige Fläche (S4) und eine konkave bildsensorseitige Fläche beinhaltet und eine negative Brechkraft aufweist,
wobei eine dritte Linse (L3), die als dritte von der Seite des Objekts (obj) aus den sieben Linsen (L1-L7) angeordnet ist, eine konvexe objektseitige Fläche (S7) und eine konkave bildsensorseitige Fläche beinhaltet und eine positive Brechkraft aufweist,
wobei eine vierte Linse (L4), die als vierte von der Seite des Objekts (obj) aus den sieben Linsen (L1-L7) angeordnet ist, eine konkave objektseitige Fläche (S9) und eine konkave bildsensorseitige Fläche beinhaltet und eine negative Brechkraft aufweist,
wobei eine fünfte Linse (L5), die als fünfte von der Seite des Objekts (obj) aus den sieben Linsen (L1-L7) angeordnet ist, eine konvexe objektseitige Fläche und eine konkave bildsensorseitige Fläche beinhaltet und eine negative Brechkraft aufweist,
wobei eine sechste Linse (L6), die als sechste von der Seite des Objekts (obj) aus den sieben Linsen (L1-L7) angeordnet ist, eine konvexe objektseitige Fläche und eine konkave bildsensorseitige Fläche beinhaltet und eine positive Brechkraft aufweist,
wobei eine siebte Linse (L7), die als siebte von der Seite des Objekts (obj) aus den sieben Linsen (L1-L7) angeordnet ist, eine konvexe objektseitige Fläche und eine konkave bildsensorseitige Fläche beinhaltet und eine negative Brechkraft aufweist, und
wobei die Linsenanordnung (400) die Bestimmungsgleichung 1, Bestimmungsgleichung 2 und Bestimmungsgleichung 5 erfüllt,

[Bestimmungsgleichung 1]

$$80 \le Vd1 \le 90$$

[Bestimmungsgleichung 2]

$$\frac{f(L-1)}{f(L)} \le -1.5$$

[Bestimmungsgleichung 5]

$$1.8 \le Fno \le 1.85$$

wobei "Vd1" eine Abbe-Zahl der ersten Linse (L1) ist, "f(L-1)" eine Brennweite der zweiten Linse (L6) von der Seite des Bildsensors (S) ist, "f(L)" eine Brennweite der ersten Linse (L7) von der Seite des Bildsensors (S) ist und "Fno" eine F-Zahl der Linsenanordnung (400) ist.

2. Linsenanordnung (400) nach Anspruch 1, ferner umfassend eine Blende (S5), die zwischen der zweiten Linse (L2) von der Seite des Objekts (obj) und der dritten Linse (L3) von der Seite des Objekts (obj) angeordnet ist.

3. Linsenanordnung (400) nach Anspruch 1 oder 2, wobei die Linsenanordnung (400) die Bestimmungsgleichung 3 erfüllt,

[Bestimmungsgleichung 3]

$$1.05 \le bfl(LL)$$

wobei "bfl(LL)" ein Abstand zwischen der ersten Linse (L7) von der Seite des Bildsensors (S) aus den sieben Linsen (L1-L7) und dem Bildsensor (S) ist, gemessen in mm entlang einer Richtung parallel zur optischen Achse (O).

4. Linsenanordnung (400) nach einem der vorhergehenden Ansprüche, wobei die Linsenanordnung (400) die Bestimmungsgleichung 4 erfüllt,

[Bestimmungsgleichung 4]

$$\frac{OAL}{YIH} \le 1.22$$

wobei "OAL" ein auf der optischen Achse (O) gemessener Abstand von einer objektseitigen (obj) Fläche (S2) der ersten Linse (L1) von der Seite des Objekts (obj) zu einer Abbildungsebene (img) des Bildsensors (S) ist und "YIH" eine maximale Bildhöhe der Abbildungsebene (img) ist.

5. Linsenanordnung (400) nach einem der vorhergehenden Ansprüche, wobei die Linsenanordnung (400) die Bestimmungsgleichung 6 erfüllt,

[Bestimmungsgleichung 6]

$$1.59 \le N5$$

wobei "N5" ein Brechungsindex der fünften Linse (L5) ist, die als fünfte von der Seite des Objekts (obj) aus den sieben Linsen (L1-L7) angeordnet ist.

6. Linsenanordnung (400) nach einem der vorhergehenden Ansprüche, wobei die Linsenanordnung (400) die Bestimmungsgleichung 7 erfüllt,

32

[Bestimmungsgleichung 7]

$$0.9 \leq \frac{f}{f1} \leq 1.1$$

wobei "f''' eine Gesamtbrennweite der Linsenanordnung (400) ist und "f1" eine Brennweite der ersten Linse (L1) von der Seite des Objekts (obj) ist.

7. Linsenanordnung (400) nach einem der vorhergehenden Ansprüche, wobei die Linsenanordnung (400) die Bestimmungsgleichung 8 erfüllt,

[Bestimmungsgleichung 8]

$$\frac{D2+D3+D4}{D1} \leq 1$$

wobei "D1" eine Dicke der ersten Linse (L1) von der Seite des Objekts (obj) auf der optischen Achse (O) ist, "D2" eine Dicke der zweiten Linse (L2) von der Seite des Objekts (obj) auf der optischen Achse (O) ist, "D3" eine Dicke der dritten Linse (L3) von der Seite des Objekts (obj) auf der optischen Achse (O) ist und "D4" eine Dicke der vierten Linse (L4) von der Seite des Objekts (obj) auf der optischen Achse (O) ist.

8. Linsenanordnung (400) nach einem der vorhergehenden Ansprüche, wobei mindestens eine (L6) der sieben Linsen (L1-L7) eine asphärische Linse ist, die einen Wendepunkt (IP) enthält.

9. Linsenbaugruppe (400) nach einem der vorhergehenden Ansprüche, wobei zumindest die erste Linse (L1) von der Seite des Objekts (obj) aus den sieben Linsen (L1-L7) ein Glasmaterial beinhaltet.

10. Linsenanordnung (400) nach einem der vorhergehenden Ansprüche, wobei mindestens eine Linse (L1-L7) aus den sieben Linsen (L1-L7) so konfiguriert ist, dass sie sich entlang einer Richtung der optischen Achse (O) nach hinten und nach vorn bewegt.

11. Linsenanordnung (400) nach einem der vorhergehenden Ansprüche, ferner umfassend den Bildsensor (S), der so konfiguriert ist, dass er durch die sieben Linsen (L1-L7) fokussiertes oder geführtes Licht empfängt.

12. Linsenanordnung (400) nach einem der vorhergehenden Ansprüche, ferner umfassend ein optisches Element (R), das auf der Seite des Objekts (obj) anstelle der ersten Linse (L1) von der Seite des Objekts (obj) angeordnet ist, um externes Licht in einer ersten Richtung (d1) zu empfangen, die die Richtung der optischen Achse (O) kreuzt, und das Licht in einer Richtung (d2) parallel zur optischen Achse (O) zu reflektieren oder zu brechen.

13. Elektronische Vorrichtung (101, 102, 104, 300), umfassend

die Linsenanordnung (400) nach einem der vorhergehenden Ansprüche; und
einen Prozessor (120, 260), der konfiguriert ist, um ein Bild basierend auf dem von dem Bildsensor (S) empfangenen Licht zu erhalten.

14. Elektronische Vorrichtung (101, 102, 104, 300) nach Anspruch 13, ferner umfassend den Bildsensor (S), der so konfiguriert ist, dass er durch die sieben Linsen (L1-L7) fokussiertes oder geführtes Licht empfängt, wobei der Bildsensor (S) vorzugsweise an den sieben Linsen (L1-L7) auf der optischen Achse (O) ausgerichtet ist.

**Revendications**

1. Ensemble de lentilles (400), comprenant

pas plus de sept lentilles (L1-L7) disposées séquentiellement le long d'une direction d'axe optique (O) entre un côté objet (obj) et un côté capteur d'image (S),

dans lequel une première lentille (L1) disposée en premier du côté objet (obj) parmi les sept lentilles (L1-L7) comprend une surface convexe côté objet (S2) et une surface concave côté capteur d'image, et a une puissance de réfraction positive,

dans lequel une deuxième lentille (L2), disposée en deuxième du côté objet (obj) parmi les sept lentilles (L1-L7), comprend une surface convexe côté objet (S4) et une surface concave côté capteur d'image, et a une puissance de réfraction négative,

dans lequel une troisième lentille (L3) disposée du côté objet (obj) parmi les sept lentilles (L1-L7) comprend une surface convexe côté objet (S7) et une surface concave côté capteur d'image, et a une puissance de réfraction positive,

dans lequel une quatrième lentille (L4) disposée du côté objet (obj) parmi les sept lentilles (L1-L7) comprend une surface concave côté objet (S9) et une surface concave côté capteur d'image, et a une puissance de réfraction négative,

dans lequel une cinquième lentille (L5) disposée du côté objet (obj) parmi les sept lentilles (L1-L7) comprend une surface convexe côté objet et une surface concave côté capteur d'image, et a une puissance de réfraction négative,

dans lequel une sixième lentille (L6) disposée du côté objet (obj) parmi les sept lentilles (L1-L7) comprend une surface convexe du côté objet et une surface concave côté capteur d'image, et a une puissance de réfraction positive,

dans lequel une septième lentille (L7) disposée du côté objet (obj) parmi les sept lentilles (L1-L7) comprend une surface convexe côté objet et une surface concave côté capteur d'image, et ayant une puissance de réfraction négative, et

dans lequel l'ensemble de lentilles (400) satisfait à l'équation conditionnelle 1, à l'équation conditionnelle 2 et à l'équation conditionnelle 5,

[Équation conditionnelle 1]

$$80 \leq Vd1 \leq 90$$

[Équation conditionnelle 2]

$$\frac{f(L-1)}{f(L)} \leq -1.5$$

[Équation conditionnelle 5]

$$1.8 \leq Fno \leq 1.85$$

dans lequel "Vd1" est un nombre d'Abbe de la première lentille (L1), "f(L-1)" est une longueur focale de la deuxième lentille (L6) du côté capteur d'image (S), "f(L)" est une longueur focale de la première lentille (L7) du côté capteur d'image (S), et "Fno" est un nombre F de l'ensemble de lentilles (400).

2.  Ensemble de lentilles (400) de la revendication 1, comprenant en outre une ouverture (S5) disposée entre la deuxième lentille (L2) du côté objet (obj) et la troisième lentille (L3) du côté objet (obj).

3.  Ensemble de lentilles (400) de la revendication 1 ou 2, dans lequel l'ensemble de lentilles (400) satisfait à l'équation conditionnelle 3,

[Équation conditionnelle 3]

$$1.05 \leq bfl(LL)$$

dans lequel "bfl(LL)" est une distance entre la première lentille (L7) du côté capteur d'image (S) parmi les sept lentilles (L1-L7) et le capteur d'image (S), mesurée en mm le long d'une direction parallèle à l'axe optique (O).

4.  Ensemble de lentilles (400) de l'une des revendications précédentes, dans lequel l'ensemble de lentilles (400) satisfait à l'équation conditionnelle 4,

[Équation conditionnelle 4]

$$\frac{OAL}{YIH} \leq 1.22$$

dans lequel "OAL" est une distance mesurée sur l'axe optique (O) à partir d'une surface côté objet (S2) de la première lentille (L1) du côté objet (obj) jusqu'à un plan d'imagerie (img) du capteur d'image (S), et "YIH" est une hauteur d'image maximale du plan d'imagerie (img).

5. Ensemble de lentilles (400) de l'une des revendications précédentes, dans lequel l'ensemble de lentilles (400) satisfait à l'équation conditionnelle 6,

[Équation conditionnelle 6]

$$1.59 \leq N5$$

dans lequel 'N5' est un indice de réfraction de la cinquième lentille (L5) disposée du côté objet (obj) parmi les sept lentilles (L1-L7).

6. Ensemble de lentilles (400) de l'une des revendications précédentes, dans lequel l'ensemble de lentilles (400) satisfait à l'équation conditionnelle 7,

[Équation conditionnelle 7]

$$0.9 \leq \frac{f}{f1} \leq 1.1$$

dans lequel "f" est une longueur focale globale de l'ensemble de lentilles (400), et "f1" est une longueur focale de la première lentille (L1) du côté objet (obj).

7. Ensemble de lentilles (400) de l'une des revendications précédentes, dans lequel l'ensemble de lentilles (400) répond à l'équation conditionnelle 8,

[Équation conditionnelle 8]

$$\frac{D2+D3+D4}{D1} \leq 1$$

dans lequel "D1" est une épaisseur de la première lentille (L1) du côté objet (obj) sur l'axe optique (O), "D2" est une épaisseur de la deuxième lentille (L2) du côté objet (obj) sur l'axe optique (O), "D3" est une épaisseur de la troisième lentille (L3) du côté objet (obj) sur l'axe optique (O), et "D4" est une épaisseur de la quatrième lentille (L4) du côté objet (obj) sur l'axe optique (O).

8. Ensemble de lentilles (400) de l'une quelconque des revendications précédentes, dans lequel à 1 est l'une (L6) des sept lentilles (L1-L7) est une lentille asphérique comprenant un point d'inflexion (IP).

9. Ensemble de lentilles (400) de l'une quelconque des revendications précédentes, dans lequel au moins la première lentille (L1) du côté objet (obj) parmi les sept lentilles (L1-L7) comprend un matériau en verre.

10. Ensemble de lentilles (400) de l'une quelconque des revendications précédentes, dans lequel au moins une lentille (L1-L7) parmi les sept lentilles (L1-L7) est configurée pour se déplacer d'avant en arrière le long d'une direction de l'axe optique (O).

11. Ensemble de lentilles (400) de l'une quelconque des revendications précédentes, comprenant en outre le capteur d'image (S) configuré pour recevoir de la lumière focalisée ou guidée à travers les sept lentilles (L1-L7).

**12.** Ensemble de lentilles (400) de l'une quelconque des revendications précédentes, comprenant en outre un élément optique (R) disposé du côté objet (obj) plutôt que la première lentille (L1) du côté objet (obj) pour recevoir la lumière externe dans une première direction (d1) traversant la direction de l'axe optique (O) et refléter ou réfracter la lumière dans une direction (d2) parallèle à l'axe optique (O).

**13.** Dispositif électronique (101, 102, 104, 300) comprenant,

l'ensemble de lentilles (400) selon l'une quelconque des revendications précédentes ; et
un processeur (120, 260) configuré pour obtenir une image à partir de la lumière reçue par le capteur d'image (S).

**14.** Dispositif électronique (101, 102, 104, 300) de la revendication 13, comprenant en outre le capteur d'image (S) configuré pour recevoir de la lumière focalisée ou guidée à travers les sept lentilles (L1-L7), le capteur d'image (S) étant de préférence aligné avec les sept lentilles (L1-L7) sur l'axe optique (O).

FIG. 1

EP 4 239 387 B1

<u>200</u>

<u>280</u>

**CAMERA MODULE**

220

FLASH

210

230

IMAGE SENSOR

260

LENS ASSEMBLY

240

IMAGE STABILIZER

IMAGE SIGNAL PROCESSOR

250

MEMORY

# FIG. 2

FIG. 3

# FIG. 4

FIG. 5

## FIG. 6

FIG. 7

FIG. 8A

FIG. 8B

FIG. 8C

FIG. 9

FIG. 10

LONGITUDINAL
SPHERICAL ABER.

1.00

0.75

0.50

0.25

-0.050 -0.025  0.0  0.025  0.050
FOCUS (MILLIMETERS)

**FIG. 11A**

ASTIGMATIC
FIELD CURVES

IMG HT
T    S   6.39

4.79

3.19

1.60

-0.2  -0.1  0.0  0.1  0.2
FOCUS (MILLIMETERS)

**FIG. 11B**

656.2700 NM
587.5600 NM
546.0700 NM
486.1300 NM
435.8400 NM

DISTORTION
IMG HT

6.39

4.79

3.19

1.60

-5.0  -2.5  0.0  2.5  5.0
% DISTORTION

**FIG. 11C**

FIG. 12

FIG. 13

LONGITUDINAL
SPHERICAL ABER.

ASTIGMATIC
FIELD CURVES

DISTORTION

656.2700 NM
587.5600 NM
546.0700 NM
486.1300 NM
435.8400 NM

FIG. 14A

FIG. 14B

FIG. 14C

FOCUS (MILLIMETERS)

FOCUS (MILLIMETERS)

% DISTORTION

EP 4 239 387 B1

FIG. 15

FIG. 16

LONGITUDINAL
SPHERICAL ABER.

FOCUS (MILLIMETERS)

FIG. 17A

ASTIGMATIC
FIELD CURVES

IMG HT

FOCUS (MILLIMETERS)

FIG. 17B

DISTORTION

IMG HT

% DISTORTION

FIG. 17C

656.2700 NM
587.5600 NM
546.0700 NM
486.1300 NM
435.8400 NM

FIG. 18

# FIG. 19

FIG. 20A

FIG. 20B

FIG. 20C

FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106950681 A
- CN 112748531 A
- CN 110398822 B
- CN 112731627 A

**Non-patent literature cited in the description**

- PROCEEDINGS OF SPIE, VISUAL COMMUNICATIONS AND IMAGE PROCESSING. **ROBERT E. FISCHER** ; **HERBERT GROSS** ; **HANNFRIED ZIIGGE** ; **MARTIN PESCHKA** ; **FRITZ et al.** Blechingert disclose the Reference: HANDBOOK OF OPTICAL SYSTEMS, ABERRATION THEORY AND CORRECTION OF OPTICAL SYSTEMS. WILEY-VCH